# DEMANDE DE BREVET EUROPEEN

(11) **EP 4 709 136 A1**
(43) Date de publication de la demande: **11.03.2026**
(21) Numéro de dépôt: 25198571.9
(22) Date de dépôt: 28.08.2025
(51) Int. Cl.: H10W 90/00

(54) **PROCEDE DE FABRICATION D'UN ASSEMBLAGE 3D**

(30) Priorité: 06.09.2024 FR 2409504
(71) Demandeur: Commissariat à l'Energie Atomique et aux Energies Alternatives, 75015 Paris (FR)
(72) Inventeur: BEAUMONT, Aurélie, 38054 GRENOBLE CEDEX 09 (FR)
(74) Mandataire: Cabinet Beaumont

(57) **Abrégé**

La présente description concerne un procédé comprenant les étapes suivantes :
- fournir plusieurs ensembles comprenant chacun un substrat donneur (10) recouvert par un bloc fonctionnel (100, 200) comprenant successivement une première couche d'interconnexion (110), une couche fonctionnelle (130) et une deuxième couche d'interconnexion (120), la couche fonctionnelle comprenant un ou plusieurs composants électroniques, les couches d'interconnexion (110, 120) comprenant un matériau diélectrique (111, 121) dans lequel sont formés des éléments conducteurs (112, 122), une première surface de la première couche d'interconnexion (110) en contact avec le substrat donneur (10) et la surface libre de la deuxième couche d'interconnexion (120) étant planarisées de sorte à être compatible avec un collage direct ultérieur,
- transférer, successivement, sur un substrat receveur (20) les blocs fonctionnels (100, 200), par collage direct, pour former un assemblage 3D comprenant un substrat receveur (20) recouvert par un empilement de deux blocs fonctionnels (100, 200).

## Description

### Domaine technique

La présente description concerne de façon générale le domaine de la microélectronique, et plus particulièrement, les procédés d'assemblage 3D ainsi que les assemblages 3D obtenus.

### Technique antérieure

La microélectronique désigne l'ensemble des technologies de fabrication de composants qui utilisent des courants électriques pour transmettre, traiter ou stocker des informations. Les technologies de la microélectronique sont, en grande partie, à l'origine des formidables progrès réalisés ces dernières décennies dans le domaine entres autres de l'informatique, des télécommunications et de l'imagerie.

Les technologies de la microélectronique ont, notamment, permis ces dernières années d'introduire sur le marché de nouveaux objets (téléphone ('SmartPhone'), voiture électrique, etc.) proposant aux utilisateurs de nouveaux systèmes (écrans connectés, circuits intégrés, etc.) intégrant de nouveaux composants (micro-LED, transistors, etc.) avec chaque année des améliorations en termes de fonctionnalités (par exemple : taille de la mémoire, nombre de cœurs de processeurs, miniaturisation, etc.).

Cette évolution 'fonctionnelle' du secteur de la microélectronique a actuellement des répercussions négatives sur l'environnement. En particulier, on peut citer l'utilisation des ressources naturelles : métaux rares, consommation d'eau, l'augmentation de la consommation énergétique par l'adoption de nouveaux objets, la production de déchets, etc.

Pour réduire l'impact environnemental de la microélectronique, les entreprises peuvent s'appuyer individuellement sur les normes ISO14004 et ISO14006, qui donne des lignes directrices pour aider les organismes à établir, documenter, mettre en œuvre, tenir à jour et améliorer en continu leur management de l'éco-conception et sa mise en application.

Des efforts importants de recherche et développement (R&D) sont ainsi menés actuellement au niveau mondial pour élargir la gamme des technologies disponibles pour l'assemblage des composants. Ces recherches sont principalement axées sur l'assemblage 3D (ou 2.5D ou 3.5D), qui consiste à empiler les substrats ou les puces verticalement, avec des techniques d'amincissement de puces, dans le but d'aller vers des intégrations de plus en plus poussées. Ces techniques 3D permettent d'augmenter les performances (exemple la bande passante entre un processeur et une mémoire), de réduire la consommation électrique en remplaçant une longue connexion horizontale par une courte connexion verticale, de baisser les coûts de production en choisissant la technologie adaptée à la fonction recherchée. C'est donc un outil majeur dans une démarche d'écoconception pour la microélectronique, mais qui se heurte à des problèmes à la fois technologiques et organisationnels.

L'assemblage 3D est basé sur différentes technologies d'interconnexions verticales à faible pas ('Fine Pitch Interconnects') : collage direct de surfaces structurées Métal-Diélectrique (collage hybride ou 'hybrid bonding), vias traversants haute densité (TSV pour 'Through-Silicon Via' ou TDV pour 'Through-Dielectric Via'), niveau Damascene ('ReRouting') ou couche de redistribution ('ReDistribution Layer' ou RDL).

Ces technologies d'assemblage 3D sont bien connues et maitrisées à l'échelle du substrat (ou 'wafer'), c'est-à-dire à l'échelle d'un substrat Silicium de dimension 200mm ou 300mm), pour un nombre réduit d'assemblages (de l'ordre de 2 à 3 empilements). Par contre elles sont très difficiles à appliquer pour un nombre élevé d'assemblages à l'échelle du substrat, et plus encore à l'échelle de la puce.

En effet, toutes ces technologies d'assemblage 3D reposent sur des procédés de type damascène, qui comportent au moins une étape de planarisation des surfaces des composants par polissage mécano-chimique (CMP). Or, la CMP de planarisation est un procédé qui induit des effets de bords importants ('CMP at the Wafer Edge - Modeling the Interaction between Wafer Edge Geometry and Polish Performance' (2005) Materials Research Society symposia proceedings. Materials Research Society 867). Chaque assemblage 3D entraîne ainsi une dégradation des bords des plaques ('wafers') ou des puces par un phénomène d'érosion locale, rendant difficile jusqu'à impossible d'ajouter l'empilement suivant. C'est aussi un procédé très impactant pour la fiabilité des dispositifs car elle induit des microfissures intra et inter couches, phénomène qui augmente avec le nombre de niveaux damascène ('Impact of the CMP Process on the Multilevel Stack Mechanical Reliability' (2008) 10th Electronics Packaging Technology Conference).

Le collage hybride requiert lui aussi une étape de CMP pour activer les surfaces à coller, en créant des liaisons pendantes, et pour contrôler les hauteurs relatives des plots de métal et de la matrice diélectrique (EP 2863420 B1).

De plus, les nouveaux objets issus de la microélectronique sont actuellement fabriqués de manière très segmentée. Chaque entreprise de composants microélectroniques (par exemple de type sans usine ('fabless'), ou IDM ('Integrated Device Manufacturer')) développe et fabrique un ou des composants semi-conducteurs ayant une fonction de base (RF, mémoire, logique, ...), selon un design qui lui est propre, avec un matériau adapté, dans une usine de fabrication de son choix (fonderie, IDM, ...), en fonction de sa propre feuille de route technologique et environnementale. Les substrats sur lesquels ces composants ont été fabriqués sont généralement des plaquettes de Silicium de diamètre 200mm ou 300mm. Pour assembler les composants, les conditionner et tester les systèmes intégrés obtenus (puce IC pour 'Integrated Circuit', ou micro-écrans, ...), les fabricants de semi-conducteurs font majoritairement appel aux sociétés spécialisées dans l'assemblage et le test de composants semi-conducteurs (OSAT pour 'Outsourced semiconductor assembly and test'), sauf pour quelques fabricants IDM qui possèdent leurs propres usines d'assemblage. Pour cet assemblage, les plaques avec leurs composants sont découpées en puces, et les puces sont assemblées par microsoudure sur un substrat de conditionnement ('Package Substrate'), via des dépôts de contacts en alliage de cuivre plaqué étain, nickel ou or, puis moulage dans du plastique.

Dans ce contexte, l'assemblage 3D de puces ou de substrats est très complexe car il pose de nombreux problèmes d'incompatibilité : au niveau des substrats (matériaux de différents diamètres, nature par exemple), du design (taille des puces différentes, fonctions non optimisées par rapport à l'usage, à l'assemblage notamment), des technologies de fabrication (marques d'alignement différentes selon les fonderies, méthodes de test, matériaux utilisés pour les fonctions et les connections).

### Résumé de l'invention

Il existe un besoin d'avoir un procédé de fabrication d'un assemblage 3D, facile à mettre en œuvre, l'assemblage 3D pouvant avoir plusieurs blocs fonctionnels tout en présentant une bonne tenue mécanique, un encombrement réduit et de bonnes performances.

Ce but est atteint par un procédé de fabrication d'un assemblage 3D comprenant les étapes suivantes :
- fournir au moins deux ensembles comprenant chacun un substrat donneur recouvert par un bloc fonctionnel comprenant successivement une première couche d'interconnexion, une couche fonctionnelle et une deuxième couche d'interconnexion, la couche fonctionnelle comprenant un ou plusieurs composants électroniques, la première couche d'interconnexion et la deuxième couche d'interconnexion comprenant un matériau diélectrique dans lequel sont formés des éléments conducteurs, de préférence en cuivre, une première surface de la première couche d'interconnexion en contact avec le substrat donneur et la surface libre de la deuxième couche d'interconnexion étant planarisées de sorte à être compatible avec un collage direct ultérieur,
- transférer, successivement, sur un substrat receveur les blocs fonctionnels, par collage direct, les éléments conducteurs de la première couche d'interconnexion du premier bloc fonctionnel étant en regard et en contact des éléments conducteurs de la deuxième couche d'interconnexion du deuxième bloc fonctionnel, moyennant quoi on obtient un assemblage 3D comprenant un substrat receveur recouvert par un empilement de deux blocs fonctionnels.

Selon un mode de réalisation particulier, au moins 5 blocs fonctionnels, de préférence au moins 10 blocs fonctionnels, sont transférés successivement sur le substrat receveur lors de l'étape iv).

Selon un mode de réalisation particulier, après le transfert des blocs fonctionnels, le procédé comprend les étapes suivantes :
- coller l'assemblage 3D sur un adhésif,
- découper le substrat receveur et les blocs fonctionnels et retirer le substrat receveur, moyennant quoi on obtient plusieurs empilements de blocs fonctionnels singularisés,
- éventuellement, coller les différents empilements de blocs fonctionnels singularisés sur un élément externe, tel qu'un circuit imprimé ou un substrat laminé.

Selon un mode de réalisation particulier, un des blocs fonctionnels recouvre partiellement le substrat donneur, des blocs d'interconnexion étant disposés, sur le substrat donneur, de chaque côté dudit bloc fonctionnel et, lors de l'étape iv), ledit bloc fonctionnel et les blocs d'interconnexion sont transférés simultanément sur le substrat receveur.

Selon un mode de réalisation particulier, au moins un des ensembles fourni à l'étape i) est obtenu selon les étapes suivantes :
- fournir un substrat temporaire recouvert par la couche fonctionnelle,
- former la première couche d'interconnexion sur une première face de la couche fonctionnelle, et la planariser,
- transférer la première couche d'interconnexion et la couche fonctionnelle sur le substrat donneur, en collant le substrat donneur sur la couche fonctionnelle et en séparant le substrat temporaire,
- former la deuxième couche d'interconnexion sur une deuxième face de la couche fonctionnelle,
- planariser la deuxième couche d'interconnexion.

Selon un mode de réalisation particulier, une partie ou la totalité des blocs fonctionnels comprennent des puces électroniques.

Ce but est également atteint par un procédé de détermination des étapes d'un procédé de fabrication d'un assemblage 3D, le procédé de détermination comprenant les étapes suivantes :
- définir des fonctions de l'assemblage 3D, l'assemblage 3D comprenant un substrat et un empilement de différents blocs fonctionnels,
- simuler l'assemblage 3D en choisissant différentes natures et/ou dimensions du substrat et/ou des blocs fonctionnels et/ou en choisissant différents empilements de blocs fonctionnels,
moyennant quoi on sélectionne un premier procédé de fabrication de l'assemblage 3D.

Selon un mode de réalisation particulier, au moins un autre procédé de fabrication de l'assemblage 3D est défini et comparé au premier procédé de fabrication de l'assemblage 3D, selon plusieurs critères, par exemple en termes de faisabilité, de risque technique, de fonctionnalité, de coût et/ou d'impact sur l'environnement, de manière à choisir le procédé de fabrication de l'assemblage 3D le plus adapté.

Ce but est également atteint par un assemblage 3D comprenant un substrat receveur sur lequel sont empilés au moins deux blocs fonctionnels, de préférence au moins 5 blocs fonctionnels, encore plus préférentiellement au moins 10 blocs fonctionnels,
chaque bloc fonctionnel comprenant une couche fonctionnelle, comprenant un ou plusieurs composants électroniques, disposée entre deux couches d'interconnexion, les couches d'interconnexion comprenant un matériau diélectrique dans lequel sont formés des éléments conducteurs, de préférence en cuivre,
chaque bloc fonctionnel étant plan.

Selon un mode de réalisation particulier, chaque bloc fonctionnel comprend une puce électronique.

Ce but est également atteint par un ensemble comprenant un substrat donneur recouvert par un bloc fonctionnel comprenant successivement une première couche d'interconnexion, une couche fonctionnelle et une deuxième couche d'interconnexion, la couche fonctionnelle comprenant un ou plusieurs composants électroniques, la première couche d'interconnexion et la deuxième couche d'interconnexion comprenant un matériau diélectrique dans lequel sont formés des éléments conducteurs, de préférence en cuivre, une première surface de la première couche d'interconnexion en contact avec le substrat donneur et la surface libre de la deuxième couche d'interconnexion étant planarisées de sorte à être compatible avec un collage direct ultérieur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1A, la figure 1B, la figure 1C, la figure 1D et la figure 1E représentent, de manière schématique, différentes étapes d'un procédé de fabrication d'un assemblage 3D, selon un mode de réalisation particulier de l'invention ;
la figure 2A, la figure 2B et la figure 2C représentent, de manière schématique, en coupe et en vue de côté, un assemblage 3D, selon différents modes de réalisation particuliers de l'invention ;
la figure 3A, la figure 3B, la figure 3C, la figure 3D, la figure 3E et la figure 3F représentent, de manière schématique, différentes étapes d'un procédé de fabrication d'un substrat donneur recouvert par un bloc fonctionnel, selon un mode de réalisation particulier de l'invention ;
la figure 4A, la figure 4B, la figure 4C, la figure 4D, la figure 4E, la figure 4F, la figure 4G, la figure 4H, la figure 4I, la figure 4J, la figure 4K et la figure 4L représentent, de manière schématique, différentes étapes d'un procédé de fabrication d'un substrat donneur recouvert par un bloc fonctionnel, selon un autre mode de réalisation particulier de l'invention ;
la figure 5A, la figure 5B, la figure 5C, la figure 5D et la figure 5E représentent, de manière schématique, en coupe et en vue de côté, un substrat temporaire, selon différents modes de réalisation particuliers de l'invention ;
la figure 6 représente, de manière schématique, en coupe et en vue de côté, un substrat receveur, selon un mode de réalisation particulier de l'invention ;
la figure 7A, la figure 7B et la figure 7C, représentent, de manière schématique, différentes étapes d'un procédé de découpe d'un substrat receveur recouvert par plusieurs blocs fonctionnels, selon un mode de réalisation particulier de l'invention ;
la figure 8 représente, de manière schématique, en vue de dessus, le substrat receveur de la figure 7C ;
la figure 9A, la figure 9B, la figure 9C et la figure 9D représentent, de manière schématique, différentes étapes d'un procédé d'assemblage de puces électroniques sur un substrat final, selon un mode de réalisation particulier de l'invention ;
la figure 10A, la figure 10B et la figure 10C, représentent, de manière schématique, un procédé d'assemblage 3D de blocs fonctionnels à partir de différentes plaques recouvertes chacune par un bloc fonctionnel, selon un autre mode de réalisation particulier de l'invention ;
la figure 11A, la figure 11B, la figure 11C, la figure 11D, la figure 11E, la figure 11F et la figure 11G, représentent, de manière schématique, un procédé d'assemblage 3D à partir de substrats donneurs recouverts par des blocs fonctionnels comprenant des puces 'HBM DRAM', selon un autre mode de réalisation particulier de l'invention ;
la figure 12A, la figure 12B, la figure 12C, la figure 12D, la figure 12E et la figure 12F représentent, de manière schématique, un procédé de fabrication d'un assemblage 3D comprenant un bloc fonctionnel 'Compute', des blocs fonctionnels comprenant des puces 'HBM DRAM', et un bloc fonctionnel 'Logic', selon un mode de réalisation particulier de l'invention ;
la figure 13 représente, de manière schématique et en coupe, une partie d'un processeur pour l'intelligence artificielle selon un mode de réalisation particulier de l'invention ;
la figure 14 représente, de manière schématique et en coupe, un substrat receveur comprenant un bloc 'ASIC', selon un mode de réalisation particulier de l'invention ;
la figure 15A, la figure 15B et la figure 15C représentent, de manière schématique, un procédé de fabrication d'un bloc fonctionnel 'DRAM', selon un autre mode de réalisation particulier de l'invention ;
la figure 16A, la figure 16B et la figure 16C représentent, de manière schématique, un procédé de fabrication d'un bloc fonctionnel 'Photonic', selon un autre mode de réalisation particulier de l'invention ;
la figure 17A, la figure 17B, la figure 17C et la figure 17D, représentent, de manière schématique, un procédé de fabrication d'un assemblage 3D comprenant un bloc fonctionnel 'ASIC', un bloc fonctionnel 'DRAM' et un bloc fonctionnel 'Photonic', selon un mode de réalisation particulier de l'invention ;
la figure 18 et la figure 19 représentent, de manière schématique, respectivement en vue de dessus et en coupe, une partie d'un assemblage hétérogène pour la radiofréquence, selon un mode de réalisation particulier de l'invention ;
la figure 20A, la figure 20B et la figure 20C représentent, de manière schématique, un procédé de fabrication d'un bloc fonctionnel 'DHBT', selon un mode de réalisation particulier de l'invention ;
la figure 21 représente, de manière schématique et en coupe, un substrat receveur selon un mode de réalisation particulier de l'invention ;
la figure 22A, la figure 22B et la figure 22C représentant, de manière schématique, différentes étapes d'un procédé de fabrication de puces, selon un autre mode de réalisation particulier de l'invention ;
la figure 23 représente, de manière schématique et en coupe, un dispositif comprenant le substrat receveur de la figure 21 sur lequel ont été transférés le bloc fonctionnel 'DHBT' de la figure 20C et les puces de la figures 22C, selon un mode de réalisation particulier de l'invention.

Les différents éléments ne sont pas nécessairement représentés à une échelle uniforme pour rendre les figures plus lisibles.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par exemple, les différents substrats donneurs ont la même référence, même si ces derniers peuvent être différents. De même, les premières couches d'interconnexion des différents blocs fonctionnels ont la même référence même si elles peuvent être différentes. Il en va de même pour les couches fonctionnelles et pour les deuxièmes couches d'interconnexion des différents blocs fonctionnels.

Par souci de clarté, seuls les étapes et éléments utiles à la compréhension des modes de réalisation décrits ont été représentés et sont détaillés.

Pour une meilleure lisibilité des figures, les blocs fonctionnels peuvent être représentés parfois sous la forme d'un monobloc afin d'éviter de représenter toutes les couches de l'empilement formant ledit bloc fonctionnel.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 %, de préférence à 5 %.

Par compris entre X et Y, on entend que les bornes X et Y sont incluses.

Par compatible avec un collage direct, on entend que la rugosité RMS de la surface à coller est comprise entre 0 et 1,5 nm, et de préférence inférieure ou égale à 1 nm, et que la topographie (différence de hauteur entre les plots métalliques et le matériau diélectrique) est comprise entre 0 et 30 nm, de préférence inférieure à 20 nm.

Le procédé de fabrication d'un assemblage 3D comprend les étapes suivantes :
- fournir au moins deux ensembles comprenant chacun un substrat donneur 10 recouvert par un bloc fonctionnel 100, 200 comprenant successivement une première couche d'interconnexion 110, une couche fonctionnelle 130, et une deuxième couche d'interconnexion 120, la couche fonctionnelle comprenant un ou plusieurs composants électroniques ainsi que des vias traversants de préférence en cuivre, la première couche d'interconnexion et la deuxième couche d'interconnexion 110, 120 comprenant un matériau diélectrique 111, 121 dans lequel sont formés des éléments conducteurs 112, 122, de préférence en cuivre, une première surface de la première couche d'interconnexion 110 en contact avec le substrat donneur 10 et la surface libre de la deuxième couche d'interconnexion 120 étant planarisées de sorte à être compatibles avec un collage direct ultérieur,
- transférer, successivement, sur un substrat receveur 20 les blocs fonctionnels 100, 200, par collage direct, les éléments conducteurs 112 de la première couche d'interconnexion 110 du premier bloc fonctionnel 100 étant en regard et en contact des éléments conducteurs 122 de la deuxième couche d'interconnexion 120 du deuxième bloc fonctionnel 200, moyennant quoi on obtient un assemblage 3D comprenant un substrat receveur 20 recouvert par un empilement de deux blocs fonctionnels 100, 200.

Le procédé peut permettre d'empiler plus de 2 blocs fonctionnels par exemple plus de 5 blocs fonctionnels, de préférence plus de 10 blocs fonctionnels, encore plus préférentiellement plus de 20 blocs fonctionnels, de manière encore plus préférentielle encore plus de 50, voire plus de 100 blocs fonctionnels. Les éléments conducteurs d'une des couches d'interconnexion d'un bloc fonctionnel sont disposés en regard et en contact avec les éléments conducteurs d'une des couches fonctionnelles du bloc fonctionnel adjacent.

Ce procédé d'assemblage 3D pour la microélectronique consiste à empiler plusieurs blocs fonctionnels dont les deux surfaces principales sont planes pour être compatibles avec un collage direct.

Les différents blocs fonctionnels ont été planarisés (i.e. rendus plan) un par un sur leurs deux surfaces avant de les assembler. Ainsi, les blocs ne sont pas planarisés après leur assemblage sur le substrat receveur. Ceci permet d'éviter les effets de bord et les phénomènes d'érosion localisés et d'obtenir des assemblages ayant une meilleure densité d'intégration et plus performants.

Un tel procédé permet l'assemblage 3D de tout type de composants et ouvre ainsi la voie à de très nombreuses variantes d'empilements (matériaux, fonctions, tailles, etc).

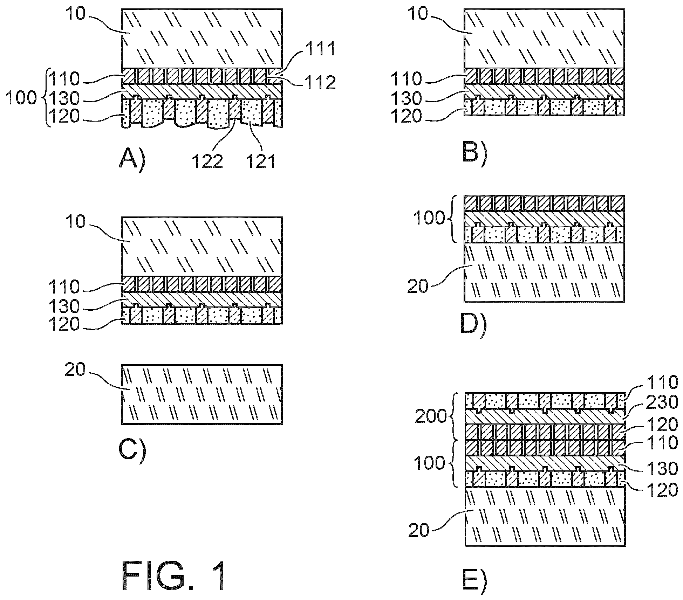

Nous allons maintenant décrire plus en détail le procédé de fabrication de l'assemblage 3D en faisant, tout d'abord, référence aux figures 1A à 1E. Le procédé comprend les étapes suivantes :
i) fournir un ensemble comprenant un premier substrat donneur 10 recouvert par un premier bloc fonctionnel 100 comprenant successivement depuis le premier substrat donneur 10 : une première couche d'interconnexion 110, une couche fonctionnelle 130, une deuxième couche d'interconnexion 120, la couche fonctionnelle comprenant un ou plusieurs composants électroniques ainsi que des vias traversants de préférence en cuivre, les couches d'interconnexion 110, 120 comprenant un matériau diélectrique 111, 121 dans lequel sont formés des éléments conducteurs 112, 122, de préférence en cuivre (figure 1A), la surface de la première couche d'interconnexion 110 en contact avec le substrat donneur ayant été planarisée de sorte à être compatible avec un collage direct ultérieur,
ii) réaliser une étape de planarisation sur la deuxième couche d'interconnexion 120, de sorte à la rendre compatible avec un collage direct ultérieur, moyennant quoi le premier substrat donneur 10 est recouvert par un premier bloc fonctionnel 100 planarisé (figures 1B),
iii) répéter les étapes a) et b) pour former un deuxième substrat donneur 10 recouvert par un deuxième bloc fonctionnel 200 comprenant une couche fonctionnelle 230 disposée entre deux couches d'interconnexion 110, 120,
iv) transférer sur un substrat receveur 20 par collage direct et retrait du donneur le premier bloc fonctionnel 100 puis le deuxième bloc fonctionnel 200, moyennant quoi on obtient un assemblage 3D comprenant un substrat receveur 20 recouvert par deux blocs fonctionnels 100, 200 (figures 1D et 1E).

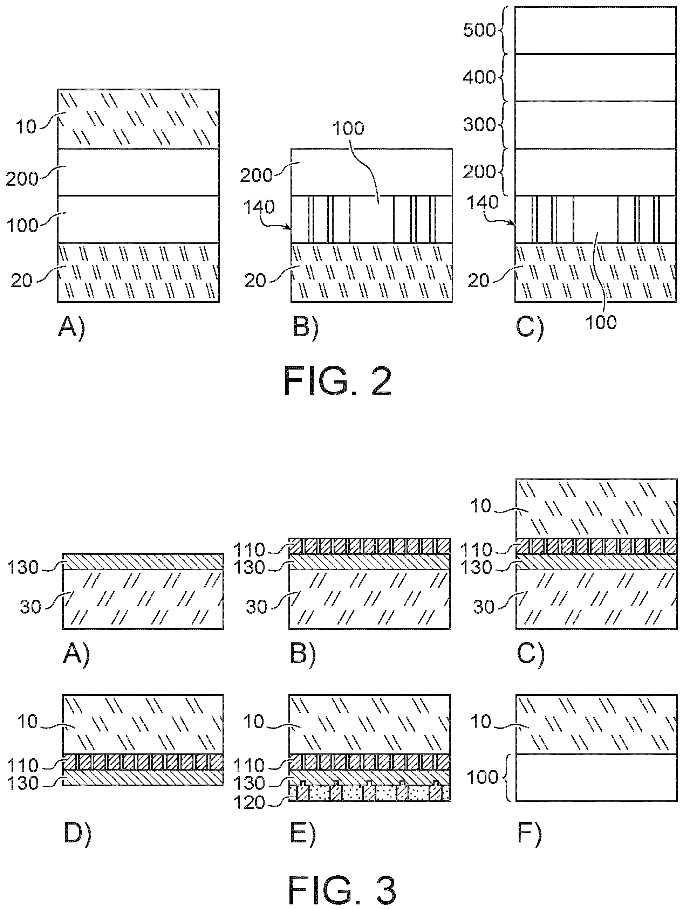

Les blocs fonctionnels 100, 200 empilés sur le substrat receveur 20 peuvent être identiques (figure 2A) ou différents (figure 2B). L'étape iii) est répétée autant de fois que nécessaire pour avoir le nombre de blocs fonctionnels 100, 200, 300, 400, 500 désirés (par exemple 5 blocs fonctionnels sont représentés sur la figure 2C).

Selon une première variante de réalisation, par exemple représentée sur les figures 3A à 3F, l'ensemble fourni à l'étape i) peut être obtenu selon les étapes suivantes :
i.a) fournir un substrat temporaire initial 30 comportant une couche fonctionnelle 130 et ses contacts associés (figure 3A),
i.b) former la première couche d'interconnexion 110 sur la face libre de la couche fonctionnelle 130, et la planariser (figure 3B),
i.c) transférer la première couche d'interconnexion 110 et la couche fonctionnelle 130 sur le substrat donneur 10 :
   - en collant le substrat donneur 10 sur la première couche d'interconnexion 110 (figure 3C) et,
   - en séparant tout ou une partie du substrat temporaire initial 30 de l'ensemble formé du substrat donneur 10, de la première couche d'interconnexion 110 et de la couche fonctionnelle 130 (figure 3D),
   - éventuellement retirer la partie du substrat temporaire initial 30 restant sur l'ensemble formé du substrat donneur 10, de la première couche d'interconnexion 110 et de la couche fonctionnelle 130,
i.d) former des vias traversants dans la couche fonctionnelle 130 ainsi qu'une deuxième couche d'interconnexion 120 sur une deuxième face de la couche fonctionnelle 130, et la planariser, moyennant quoi on obtient un substrat donneur 10 recouvert par un bloc fonctionnel 100 ayant ses deux surfaces prêtes pour l'assemblage par collage direct(figures 3E et 3F).

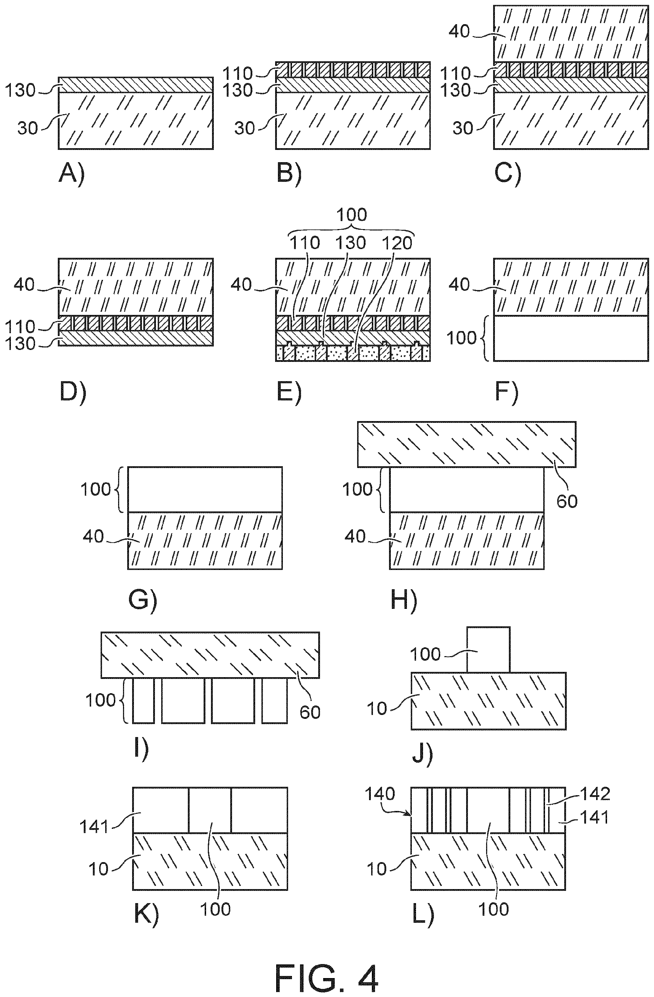

Selon une autre variante de réalisation, par exemple représentée sur les figures 4A à 4L, l'ensemble fourni à l'étape i) peut être obtenu selon les étapes suivantes :
i.a') fournir un premier substrat temporaire initial 30 comportant une première couche fonctionnelle et ses contacts associés 130 (figure 4A),
i.b') former une première couche d'interconnexion 110 sur une première face de la couche fonctionnelle 130, et la planariser (figure 4B),
i.c') transférer la première couche d'interconnexion 110 et la couche fonctionnelle 130 sur un deuxième substrat temporaire 40 :
   - en collant le deuxième substrat temporaire 40 sur la couche fonctionnelle 130 (figure 4C) et,
   - en séparant tout ou une partie du substrat temporaire initial 30 (figure 4D),
   - éventuellement en retirant la partie du substrat temporaire initial 30 restant sur l'ensemble formé du substrat temporaire 40, de la couche d'interconnexion 110 et de la couche fonctionnelle 130,
i.d') former des vias traversants dans la couche fonctionnelle 130 ainsi qu'une deuxième couche d'interconnexion 120 sur une deuxième face de la couche fonctionnelle 130, et la planariser moyennant quoi on obtient un substrat temporaire 40 recouvert par un bloc fonctionnel 100 ayant ses deux surfaces prêtes pour l'assemblage par collage direct (figures 4E, 4F et 4G),
i.e') singulariser le bloc fonctionnel 100 en plusieurs parties (par exemple, en plusieurs puces dans le cas où le bloc fonctionnel comprend plusieurs puces), par exemple en collant le bloc fonctionnel 100 sur un adhésif 60 (figure 4H), en découpant le deuxième substrat temporaire 40 et le bloc fonctionnel 100, puis en retirant le deuxième substrat temporaire 40 (figure 4I),
i.f') transférer une ou plusieurs parties du bloc fonctionnel 100 sur un substrat donneur 10 (figure 4J), par exemple par collage direct puce à plaque ('die to wafer' ou D2W),
i.g') déposer un matériau diélectrique 140 de chaque côté des parties de blocs fonctionnels 100 ('Inter Die Gap Fill') collées (figure 4K), l'épaisseur du matériau diélectrique 140 étant supérieure à l'épaisseur des parties de blocs fonctionnels, puis former des vias et les remplir par un métal 142 pour former un niveau damascène, et planariser la surface matériau diélectrique/bloc fonctionnnel obtenue(figure 4L).

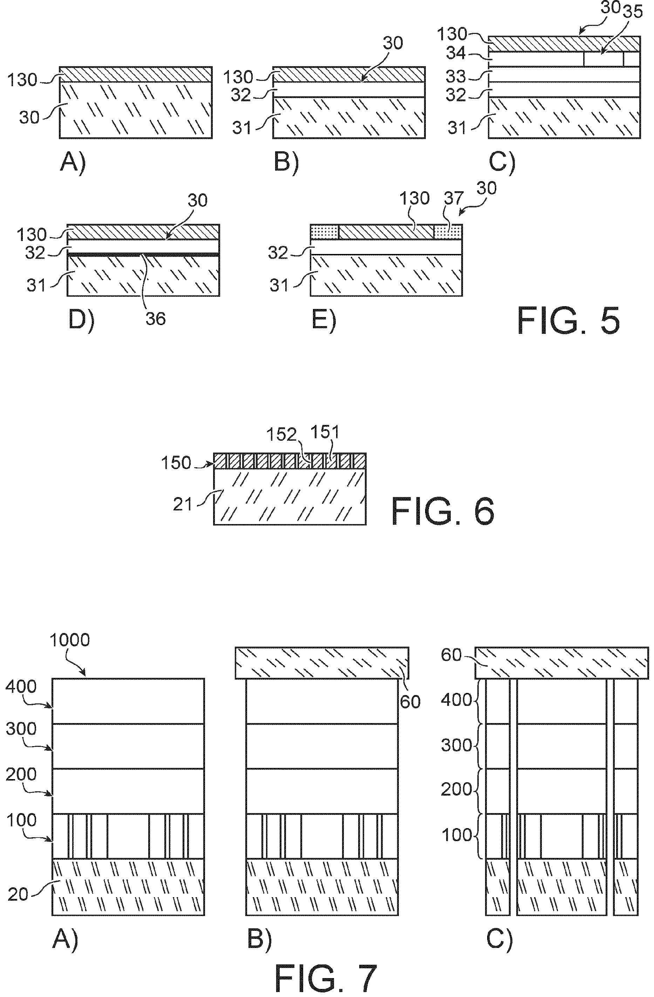

Les substrats temporaires initiaux 30 utilisés peuvent être choisis parmi les substrats suivants, selon la fonction et l'assemblage souhaités :
- un substrat massif 30 (Silicium, Germanium, InP, GaAs, Verre, LiTaO₃,...), par exemple de diamètre 100mm, 150mm, 200mm, ou 300mm (figure 5A),
- un substrat 30 de type 'X-On-Insulator' (par exemple un substrat SOI, GeOI, InPoSi, POI, GaNOI,...) comprenant un substrat support 31 recouvert par une couche d'oxyde enterrée (BOX ou 'buried oxide') 32 (figure 5B), pouvant être par exemple obtenu selon la technologie Smart Cut^{™} ; l'utilisation d'un substrat 'X-On-Insulator' permet de mieux contrôler le retrait du substrat support 31,
- un substrat 30 de type 'X-On-Insulator-On-Insulator' (figure 5C) pour faciliter le retrait d'une partie du substrat temporaire initial 30 notamment dans le cas où ce substrat 30 comporte des éléments (par exemple un BOX 32, une couche de semi-conducteur 33, notamment du silicium, une cavité 35, par exemple une cavité thermique, résonateurs optiques,...) situés entre la face supérieure du substrat 30 et une couche isolante 34, recouvrant le substrat support 31,
- un substrat 30 de type Substrat Démontable incluant une interface fragile enterrée 36 par exemple située sous un BOX ou directement sous la couche fonctionnelle pour le retrait ultérieur du substrat support 31 (figure 5D) ; l'interface fragile enterrée 36 peut être une interface de collage contrôlée, une couche poreuse, une couche nitrurée, une couche de décollement comme un dépôt Ti (10nm épaisseur)/Pt (100nm épaisseur).

La couche fonctionnelle 130 peut recouvrir complètement le substrat initial 30 (figures 5A, 5B, 5C et 5D) ou une partie du substrat initial 30 (figure 5E). Lorsque la couche fonctionnelle 130 recouvre partiellement le substrat temporaire, un matériau diélectrique 37 est positionné sur le substrat de part et d'autre de la couche fonctionnelle, de manière coplanaire, de façon à avoir une surface plane diélectrique/couche fonctionnelle recouvrant le substrat temporaire 30.

Dans ce cas la couche fonctionnelle 130 peut être formée selon des procédés bien connus de l'homme du métier. A titre illustratif et non limitatif, elle peut être formée par gravure localisée (lié au design), par fabrication d'un substrat reconstitué ('rebuilt wafer') suivie d'une planarisation de la surface par dépôt de diélectrique et polissage mécano-chimique. L'épaisseur d'une fonction est typiquement de l'ordre de quelques centaines de nm à quelques µm voire quelques dizaines de µm. Par quelques dizaines de micromètres, on entend que l'épaisseur est inférieure à 100 µm et de préférence inférieure à 50µm. De préférence, l'épaisseur de la couche fonctionnelle est inférieure à 1 µm.

La topographie des substrats temporaires 30 est, de préférence, inférieure à 200nm voire inférieure à 100nm, compatible avec la formation ultérieure des couches fonctionnelle et d'interconnexion.

Le substrat donneur 10 peut être choisi parmi :
- un substrat massif, de préférence un substrat Silicium bas coût ou un substrat adapté au substrat initial en terme de comportement thermo-mécanique (par exemple, substrat donneur ayant un coefficient de dilatation thermique proche de celui du substrat temporaire initial),
- un substrat comportant une couche implantée avec des ions H⁺ et/ou He tel que décrit dans la technologie Smart Cut^{™}
- un substrat comportant une couche ou interface fragile enterrée, par exemple un substrat SOI comportant une interface de collage de faible adhérence,
- un substrat comportant une couche fragile en surface, par exemple une couche poreuse formée par anodisation du Silicium et/ou une couche de séparation (de type Ti 10nm + Pt 100nm par exemple),
- un substrat comportant des marques d'alignement pour le collage, afin de limiter la déformation de l'assemblage formé d'un des substrats temporaires avec le substrat donneur avant le retrait d'une partie d'un des substrats temporaires,
- un substrat comportant une couche contrainte en face arrière (par exemple du 60nm de SiN), afin de limiter la déformation de l'assemblage d'un des substrats temporaires avec le substrat donneur avant le retrait d'une partie d'un des substrats temporaires.

Le substrat donneur 10 peut être un substrat démontable. Il peut s'agir d'un substrat en silicium ayant été soumis à une étape d'implantation d'hydrogène (procédé 'Smart Cut^{™}'), d'un substrat choisi de manière à ce que l'énergie de collage entre le substrat donneur 10 et le bloc fonctionnel soit inférieur à l'énergie de collage entre le bloc fonctionnel et le substrat receveur 20 (et plus particulièrement la couche d'interconnexion 150 du substrat receveur 20) ou à l'énergie de collage entre le bloc fonctionnel et un autre bloc fonctionnel (en fonction de la position du bloc fonctionnel dans l'empilement recouvrant le substrat receveur 20).

Il peut également s'agir d'un substrat composite comprenant un substrat support recouvert par une couche de séparation ('release layer'). Par exemple, la couche de séparation est une couche adhésive dont les propriétés d'adhésion peuvent être réduites par application d'un rayonnement ultraviolet ou par application d'un traitement thermique.

Selon une variante du procédé, le substrat donneur 10 peut comporter un ou plusieurs niveaux métal-diélectrique formant le BEOL de la fonction, le premier niveau de métal formé sur le donneur correspond alors à la couche de connexion 110.

Lors des étapes 1.c) et 1.c'), l'étape de transfert met en œuvre une étape de collage direct suivie d'une étape de séparation. Le collage direct est une technique de collage ne nécessitant pas d'ajout de matière.

La couche fonctionnelle 130 est collée sur le substrat donneur 10 ou sur le deuxième substrat temporaire 40 par collage direct. Ce type de collage consiste à mettre en contact les surfaces à coller sans ajout de matière, au moyen des préparations suivantes : polissage mécano-chimique d'activation des surfaces et/ou nettoyage chimique et/ou nettoyage 'mécanique' (Megpie^{®}, 'scrubber') et/ou activation plasma (He ou N₂ par exemple) et/ou activation de type SAB (pour surface activated bonding). Ces préparations permettent le collage de la surface mixte Métal-Diélectrique sur le substrat. Le collage direct peut être suivi d'un recuit de consolidation du collage dans la gamme 100-500°C.

Lorsque le substrat temporaire 30, 40 est séparé, tout ou une partie du substrat 30, 40 peut être retirée. Par exemple, dans le cadre de la mise en œuvre de la technologie Smart Cut^{™}, seule une partie du substrat 40 est séparée. La partie implantée reste collée à la couche fonctionnelle 120. La partie restante peut être conservée ou retirée.

Le retrait du substrat temporaire 30, 40 peut être réalisé par amincissement mécanique et/ou chimique depuis la face opposée à la couche fonctionnelle 130. Dans le cas d'un substrat SOI, le substrat temporaire 30, 40 utilisé en Silicium peut être retiré par une gravure du Silicium sélective vis-à-vis de la couche d'oxyde enterrée : par exemple une gravure sèche utilisant du SF6 ou une gravure humide utilisant du TMAH. Dans le cas d'un substrat 30, 40 incluant une interface fragile enterrée 36, le retrait du substrat temporaire 30, 40 est effectué par fracture au niveau de la zone fragile, par l'applications de contraintes mécaniques à la structure collée (insertion de lame, traction, pelage, etc.).

Lors de l'étape i.e'), la largeur et la longueur des parties des blocs fonctionnels sont définies par les traits de découpe selon l'empilement 3D défini.

De préférence, chaque partie découpée correspond à une puce électronique. L'épaisseur de la puce reportée peut varier entre 0,5µm et 30µm, de préférence entre 2µm et 10µm selon l'application visée.

Lors de l'étape iv), le collage est un collage direct Metal-Dielectrique, la planarisation effectuée pour les étapes 1.c), 1.c') et 1d) reste compatible, après démontage du donneur, avec le collage de deux surfaces mixtes Métal-Diélectrique. Dans le cas de collage plaque à plaque, le pas d'interconnexion au niveau des plots de collage peut atteindre 400nm voire 50nm. L'épaisseur de chaque plaque est, par exemple, de l'ordre de 300µm à 1000µm. Dans le cas de collage de type puces à plaque, le pas d'interconnexion peut atteindre 1µm voire 200nm en utilisant des techniques d'auto-assemblage de puces. L'épaisseur des puces est, par exemple, de l'ordre de 10µm à 1000µm, voire 2µm à 1000µm. Le collage direct peut être suivi d'un recuit de consolidation du collage dans la gamme 100-500°C. Dans le cas d'un assemblage hétérogène impliquant différents matériaux, le collage peut être assisté par SAB ('Surface Activated Bonding') pour limiter le budget thermique global de l'assemblage, le SAB permettant une très bonne adhésion des couches dès la température ambiante.

Il est possible d'obtenir un empilement dense de fonctions ultra-fines.

Lors de l'étape i.g'), le diélectrique peut comporter des Vias de type TDV ('Through-Dielectric-Vias').

Ainsi, on obtient un substrat donneur 10 dont une première face est recouverte par un bloc fonctionnel 100 comprenant la couche fonctionnelle 130, disposée entre la première couche d'interconnexion 110 et la deuxième couche d'interconnexion 120, les surfaces de chaque couche d'interconnexion étant planarisées.

Chaque couche d'interconnexion 110, 120 comprend un matériau diélectrique 111, 121 dans lequel sont formés des éléments conducteurs 112, 122. Les éléments conducteurs 112, 122 forment des pistes électriquement conductrices. Les éléments conducteurs sont, de préférence, en cuivre. La couche diélectrique 111, 121 est par exemple en un oxyde ou en un nitrure. Notamment, la couche diélectrique est en SiO₂.

La couche fonctionnelle 130 comprend une partie fonctionnelle et des contacts électriques permettant de connecter la partie fonction aux couches d'interconnexion. Elle pourrait également comprendre plusieurs parties fonctionnelles.

La couche fonctionnelle 130 comprend un ou plusieurs composants électroniques actifs. Elle peut comprendre des composants électroniques actifs (transistors, diodes, etc) et/ou des composants électroniques passifs (résistances, condensateurs, etc).

La fonction de la couche fonctionnelle est une fonction de microélectronique, par exemple une fonction de calcul, mémoire, filtres RF, amplificateurs optiques, etc.

Les contacts électriques sont choisis en fonction de la partie fonctionnelle. Ils sont élaborés selon les technologies connues de microélectronique.

La première couche d'interconnexion 110 peut comprendre un ou plusieurs niveaux damascene. Par exemple, la première couche d'interconnexion 110 peut être constituée d'un niveau dit 'VIA' ('Hybrid Bonding Via') connecté aux contacts de la couche fonctionnelle 130, puis d'un niveau dit 'METAL' ('Hybrid Bonding Metal') formé au-dessus du niveau VIA. Le niveau dit 'METAL' forme la surface de collage hybride. Elle peut comprendre des plots ('pads') de métal électriques (connectés aux vias) et des plots dits 'dummies' (non connectés aux vias) de manière à ce que la densité de métal sur la surface de la première couche d'interconnexion 110 soit de l'ordre de 25%.

Les dimensions des plots sont, par exemple, dans la gamme 100nm à 10µm, avantageusement dans la gamme de 500nm à 5 µm. Cette densité permet d'obtenir un polissage homogène de la surface mixte métal/diélectrique à coller. Avantageusement, les niveaux qui composent la première couche d'interconnexion sont fabriqués de manière à limiter les CMP de planarisation, par exemple en utilisant le procédé bien connu de double-damascène. La première couche d'interconnexion peut comporter des marques d'alignement pour le collage.

La deuxième couche d'interconnexion 120 peut comprendre un niveau TSV seul ou un niveau TSV et un ou plusieurs niveaux damascène. Le niveau TSV permet la connexion sur les contacts de la couche fonctionnelle 130 et/ou sur un niveau supérieur (par exemple avec la première couche d'interconnexion 110). Le ou les niveaux damascène qui forment la deuxième couche d'interconnexion 120 peuvent être construits de la même manière que ceux de la première couche d'interconnexion 110. Notamment, la densité de métal sur la surface inférieure ('bottom') de la deuxième couche d'interconnexion 120 est de l'ordre de 25% et les dimensions des plots sont, par exemple, dans la gamme 100nm à 10µm, avantageusement dans la gamme de 500nm à 5 µm. La deuxième couche d'interconnexion 120 peut comporter aussi des marques d'alignement pour le collage.

Les couches d'interconnexion 110, 120 décrites dans cette demande peuvent être obtenue par un procédé de type damascène et/ou un procédé de type 'formation de vias' (TSV, TDV).

Typiquement, le procédé damascène peut comprendre les étapes technologiques suivantes :
- dépôt d'une couche en un matériau diélectrique, par exemple d'épaisseur comprise entre 50nm et 50µm,
- formation de vias traversants dans cette couche en matériau diélectrique, par photolithographie et gravure du matériau diélectrique,
- dépôt d'un empilement comprenant des sous-couches (sous-couche d'accroche, sous-couche barrière de diffusion, germe métal),
- remplissage des vias par dépôt électrochimique (ECD pour 'ElectroChemical Deposition') du métal,
- polissage mécanochimique (CMP ou 'Chemical-Mechanical Polishing') du métal jusqu'à l'obtention d'une surface mixte métal-diélectrique.

Cette séquence d'étapes peut être utilisée pour réaliser le BEOL ('Eack-End-Of-Line') des composants de microélectronique.

Lors de l'étape iii), l'étape i) est répétée pour former un autre bloc fonctionnel 200. L'étape iii) peut être mise en œuvre une ou plusieurs fois.

Chaque bloc fonctionnel 100, 200, 300, 400, 500 peut comprendre des parties fonctionnelles, des contacts et/ou des connexions identiques ou différentes. Le choix des blocs fonctionnels 100, 200, 300, 400, 500 dépend de l'empilement 3D défini.

Lors de l'étape iv), les blocs fonctionnels 100, 200, 300, 400, 500 formés sont transférés depuis le substrat donneur temporaire sur un substrat receveur 20. Les blocs fonctionnels 100, 200, 300, 400, 500,... sont transférés les uns après les autres sur le substrat receveur 20. Il est possible d'utiliser un substrat donneur 10 comportant un empilement de plusieurs blocs fonctionnels. Lors de l'étape de transfert, l'empilement de blocs fonctionnels du substrat donneur est transféré sur le substrat receveur 20. A l'issue de l'étape iv), on obtient un assemblage 3D comprenant un substrat receveur 20 et un empilement comprenant N blocs fonctionnels, avec N un entier supérieur ou égal à 2 (figure 7A).

L'empilement de plusieurs blocs fonctionnels peut être obtenu en préparant, dans un premier temps, plusieurs empilements de deux blocs fonctionnels, puis en collant les empilements de deux blocs fonctionnels deux par deux, afin d'obtenir des empilements de quatre blocs fonctionnels, puis en assemblant les empilements de quatre blocs fonctionnels pour obtenir des empilements de huit blocs fonctionnels et ainsi de suite.

Le substrat receveur 20 peut être recouvert par une couche d'interconnexion 150 comprenant un matériau diélectrique 151 dans lequel sont formés des éléments conducteurs 152 (figure 6). Le bloc actif fonctionnel est alors transféré sur la couche d'interconnexion 150 recouvrant le substrat receveur 20. La première couche d'interconnexion 110 du bloc fonctionnel 100 étant disposée en regard et en contact avec la couche d'interconnexion 150 du substrat receveur 20.

Le substrat receveur 20 peut être recouvert par un ou plusieurs blocs fonctionnels avant la mise en œuvre de l'étape iv). Le substrat receveur 20 peut être de même nature que le substrat donneur 10. Le substrat receveur 20 peut jouer ultérieurement le rôle de substrat donneur, c'est-à-dire que l'empilement formé sur le substrat receveur peut être ensuite transféré sur un autre substrat receveur.

Le transfert des blocs fonctionnels sur le substrat receveur 20 peut être réalisé selon les étapes suivantes :
- assembler le substrat donneur 10 avec le substrat receveur 20, par collage direct du bloc fonctionnel 100 du substrat donneur 10 sur le substrat receveur 20, ou, le cas échéant, sur la couche d'interconnexion 150 du substrat receveur 20, ou si le substrat receveur 20 est déjà recouvert par un bloc fonctionnel, sur le bloc fonctionnel,
- séparer le substrat donneur 10 de l'ensemble ainsi obtenu.

Le collage direct s'applique sur des surfaces hétérogènes diélectrique/métal (surfaces des interconnexions) et sur des surfaces homogènes (diélectrique ou surface du substrat donneur).

Le retrait du substrat donneur 10 peut être réalisé par amincissement mécanique et/ou chimique depuis la face opposée à la couche fonctionnelle 120. Dans le cas d'un substrat 10 comportant une couche implantée avec des ions H+ et/ou He, le retrait peut être réalisé par l'application de contraintes thermiques et/ou mécaniques, par exemple par un recuit dans la gamme 200°C-500°C suivi de l'insertion d'une lame. Dans le cas d'un substrat donneur comportant une couche fragile enterrée ou surfacique, le retrait est effectué par fracture au niveau de la zone fragile, par l'applications de contraintes mécaniques à la structure collée (insertion de lame, traction, pelage, etc.).

Selon une variante de réalisation, il est possible de transférer sur le substrat receveur 20, en plus des blocs fonctionnels précédemment décrits, un ou plusieurs blocs ayant des fonctions optiques (LED, imageurs, cellule photovoltaïque, etc.) comme décrit dans le brevet européen EP 3 769 339 B1.

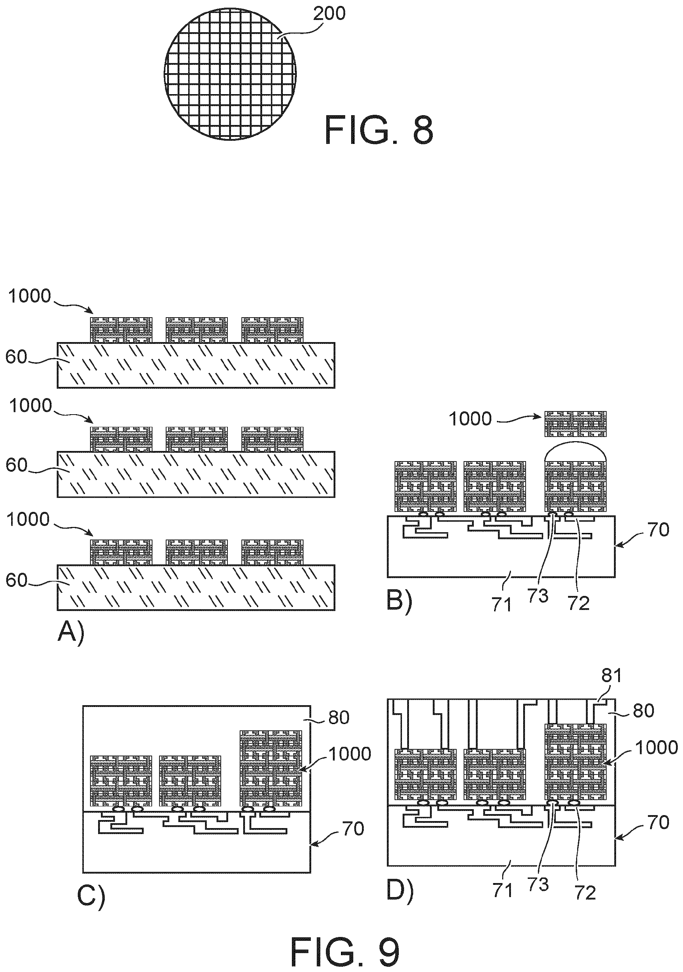

Selon une variante de réalisation, comme représenté sur les figures 7A à 7C, le procédé peut comprendre une étape ultérieure au cours de laquelle le substrat receveur 20 et l'empilement de blocs actifs 100, 200, 300, 400 ainsi obtenu (figure 7A) sont reportés sur un support temporaire 60 (figure 7B), par exemple un support adhésif ('tape'). L'ensemble est ensuite découpé en puces (figure 7C). Par exemple, il peut s'agir d'une découpe mécanique, notamment une découpe à la scie. La figure 8 montre en vue de dessus le dispositif découpé.

Le substrat receveur 20 peut ensuite être retiré. Il est possible de retirer tout ou partie du substrat receveur avant la découpe des puces.

Cette variante de réalisation est particulièrement intéressante dans le cas où les puces comportant un assemblage de couches fonctionnelles 120 doivent être assemblées avec d'autres puces électroniques. L'étape de découpe conduit à la singularisation des puces. La taille des puces (longueur, largeur) est définie par les traits de découpe selon l'empilement 3D défini.

Les empilements de puces 1000 obtenues (figure 9A) peuvent être ensuite transférées du support adhésif 60 sur un substrat final 70 (figure 9B), notamment un substrat de conditionnement ('package substrate'). Le substrat 70 peut être par exemple un substrat laminé ou un circuit imprimé. Cependant, l'assemblage final des puces sur le substrat 70 est, par exemple, obtenu par collage Metal-Dielectrique (collage direct et/ou collage avec ajout de matière). Le collage Metal/Dielectrique avec ajout de matière est un procédé d'assemblage au cours duquel l'empilement de puces est assemblé sur des plots de cuivre 72 du substrat 70, en mettant en œuvre une brasure 73 par exemple en un alliage CuNiAu ou un alliage à base d'étain, notamment l'alliage SnAg. L'étape de brasure peut être réalisée à une température dans la gamme 100-300°C.

Il est possible de répéter les étapes pour obtenir plusieurs empilements de différentes puces constituées elles-mêmes d'un assemblage de fonctions, pouvant avoir différentes tailles et/ou différentes épaisseurs (figure 9B).

A la suite de l'assemblage final des puces 1000 sur le substrat de packaging, les puces 1000 peuvent être protégées en les enrobant dans une couche de matériau isolant 80 (figure 9C). Le matériau isolant 80 peut être déposé par dispense ou par moulage ('molding'). Le matériau isolant peut être un polymère ou une résine. Le routage final peut être obtenu par exemple par formation d'une couche de redistribution 81 (RDL) non damascène (figure 9D).

Le procédé précédemment décrit permet de fabriquer un assemblage 3D comprenant un substrat receveur 20 sur lequel sont empilés au moins deux blocs fonctionnels 100, 200, de préférence au moins 5 blocs fonctionnels, encore plus préférentiellement au moins 10 blocs fonctionnels,
chaque bloc fonctionnel 100, 200 comprenant une couche fonctionnelle 130, comprenant un ou plusieurs composants électroniques, disposée entre deux couches d'interconnexion 110, 120, les couches d'interconnexion 110, 120 comprenant un matériau diélectrique 111, 121 dans lequel sont formés des éléments conducteurs, de préférence en cuivre.

Chaque bloc fonctionnel 100, 200 est plan. Autrement dit, ses faces principales sont planes et parallèles entre elles.

L'assemblage peut comprendre plus de 20 blocs fonctionnels, voire plus de 50 blocs fonctionnels empilés les uns sur les autres.

Le pas ('pitch') des interconnexions est inférieur à 10 µm, de préférence inférieur à 5 µm. Il peut être de l'ordre de 1 µm. Le pas peut être plus petit. Il est, par exemple, inférieur à 200nm, voire inférieur à 100nm. Le pas étant réduit, l'assemblage 3D présente une forte densité d'interconnexion, par exemple, jusqu'à 1 million de connexions par mm² pour un pitch de 1µm. Il est ainsi possible de miniaturiser les dispositifs électroniques.

Il est ainsi possible d'assembler des fonctions à partir de différents matériaux sans créer de contraintes thermiques pendant l'assemblage en utilisant un donneur adapté et un collage hybride froid (SAB). Tout l'assemblage est réalisé à froid, ce qui est particulièrement intéressant lorsque les fonctions sont faites sur des matériaux différents (par exemple InP et Silicium,...).

L'empilement 3D obtenu, basé sur le transfert multiple de couches actives ayant des connexions structurées Métal-Diélectrique à partir de substrats démontables, pour l'assemblage et l'interconnexion de composants électroniques peut être utilisé dans de nombreux domaines.

Le procédé précédemment décrit ouvre de nouvelles perspectives. Par exemple, il permet de créer de nouveaux assemblages originaux et performants, notamment en associant un système de pilotage d'assemblage 3D à la technologie décrite nommée HSA (technologie 'Hybrid Smart Assembly').

A partir des fonctions à assembler pour l'application visée, il est possible de déterminer en amont plusieurs assemblages possibles et d'en choisir un selon des critères particuliers.

Le procédé de détermination des étapes d'un procédé de fabrication d'un assemblage 3D comprend, par exemple, les étapes suivantes :
- définir les fonctions de l'assemblage 3D recherché,
- simuler l'assemblage des différents éléments de l'assemblage 3D, avec différentes nature et dimensions des différents blocs fonctionnels et/ou des substrats, et/ou avec différents ordres d'empilement des blocs fonctionnels, moyennant quoi on sélectionne un premier procédé de fabrication de l'assemblage 3D.

Au moins un autre procédé de fabrication de l'assemblage 3D est obtenu et comparé au premier potentiel procédé de fabrication de l'assemblage 3D, selon plusieurs critères, par exemple en termes de faisabilité, de risque technique, de fonctionnalité, de coût et/ou d'impact sur l'environnement, de manière à retenir le procédé de fabrication de l'assemblage 3D le plus adapté.

Plusieurs procédés potentiels peuvent ainsi être déterminés et comparés.

La technologie décrite ci-dessus permet l'assemblage de tout type de fonction selon une méthodologie et une chaîne de fabrication adaptées.

L'assemblage 3D (objet ou système) final est connu et défini en amont. En particulier, sont définies les fonctions et connexions recherchées.

La taille des puces finales est définie par rapport aux fonctions à assembler et au but recherché. Par exemple pour un imageur intégrant 3 fonctions (logique, mémoire et capture d'image), la taille de la puce assemblée sera définie par celle de la puce capture d'image pour optimiser l'efficacité optique.

La technologie HSA est décrite dans des kits de Design ('Design Kits' ou DK) spécifiques, par exemple choisis parmi : 'Process Design Kit', 'Assembly Design Kit', 'Chiplet Design Kit', et 'Material Design Kit'.

Un Design Kit spécifique à l'éco conception est inclus, qui rassemble les données d'Analyse de Cycle de Vie (ACV) liées à la fabrication des interconnexions (damascène, vias, collages, retrait, etc.). Des ACV liées à la fabrication des composants peuvent être ajoutées dans ce DK.

L'assemblage des fonctions est simulé avec différents scénarios :
- adaptation des designs/nœuds technologiques pour ajuster chaque fonction à la taille finale des puces,
- adaptation de la technologie HSA : choix des substrats, du type de connexion, de l'ordre d'empilement, des épaisseurs, etc.

Par exemple, pour un imageur, la puce logique peut être choisie avec un nœud relâché pour être de la taille de la puce capture d'image tout en étant peu chère (plutôt qu'un nœud avancé qui produit des puces plus petites et plus coûteuses). La puce mémoire peut être dans un nœud avancé, plus petite que la puce capture d'image, avec des connexions en périphérie de la fonction mémoire.

Chaque scénario est évalué en termes de faisabilité, risque technique, fonctionnalité, coût et impact sur l'environnement

Par exemple, dans le cas d'un écran émissif à base de LED en GaN, un scénario intégrant une couche photovoltaïque dont l'absorption est ajustée à la longueur d'onde d'émission de la LED est comparé à un scénario sans cette couche PV, de manière à quantifier l'impact de cette couche au niveau environnemental et économique : consommation de matériau, coût et impact de la fabrication d'une cellule photovoltaïque versus la réduction de la consommation énergétique du système, ...

La fabrication des puces est ensuite réalisée selon le scénario retenu.

Il est ainsi possible de faire fabriquer par différentes entreprises de composants microélectroniques (type fabless, IDM, ...) une ou plusieurs couches fonctionnelles selon un design qui lui est propre, avec un matériau adapté, dans une usine de fabrication de son choix en fonction de sa propre feuille de route technologique et environnementale.

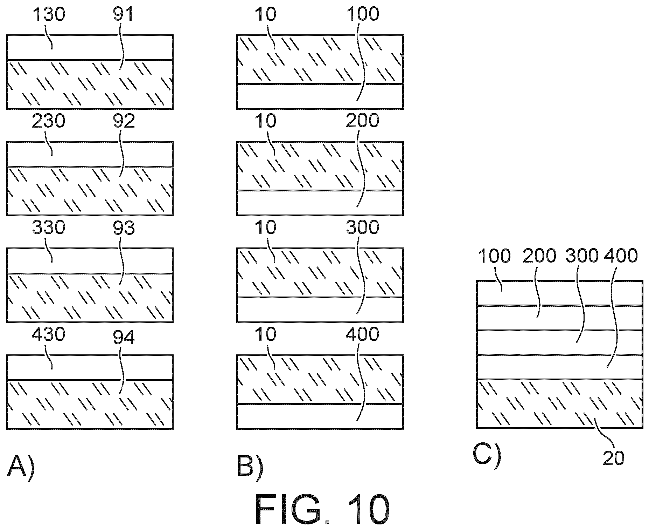

Les couches fonctionnelles 130, 230, 330, 430 sont fournies par les fabricants sont sur des substrats initiaux 91, 92, 93, 94 (figure 10A). Une première couche d'interconnexion est formée sur chaque couche fonctionnelle 130, 230, 330, 430, puis la première couche d'interconnexion et la couche fonctionnelle 130 sont transférées sur un substrat donneur 10, selon les étapes précédemment décrites, par exemple représentée sur les figures 3A à 3F ou 4A à 4L. Les substrats initiaux 91, 92, 93, 94 jouant le rôle de substrat temporaire initial 30. Après formation de la deuxième couche d'interconnexion et planarisation, les blocs fonctionnels 100, 200, 300, 400 sont formés (figure 10B) et peuvent être transférés sur un même substrat receveur 20 (figure 10C).

Dans ce contexte, l'assemblage 3D de puces ou de substrats ('wafers') est largement facilité, car le procédé permet de s'affranchir des problèmes d'incompatibilité que l'on peut retrouver avec des substrats différents et/ou des technologies de fabrication différentes.

Dans ce contexte, les problèmes d'incompatibilité qui limitent actuellement l'adoption de l'assemblage 3D sont adressés en amont et l'assemblage de multiples fonctions selon la technologie de HSA est réalisable.

Il est ainsi possible d'optimiser les assemblages dès leur conception, tout y en intégrant un pilotage environnemental.

Le système de pilotage de l'assemblage 3D permet d'optimiser la fonctionnalité, les coûts, des assemblages dès leur conception. De plus, dans une démarche d'écoconception, l'impact environnemental peut être pris en compte afin d'être considérablement réduit.

Il est ainsi possible d'intégrer un système de pilotage de l'assemblage 3D depuis la conception des puces jusqu'à la réalisation de systèmes ou objets. Cette maîtrise du design et de la chaîne de fabrication permet notamment, tout en réduisant les coûts de fabrication, de réduire les impacts sur les milieux naturels, les impacts sur la consommation des ressources, les impacts sur la santé humaine.

Les différentes étapes peuvent faire l'objet d'un logiciel spécifique utilisant l'intelligence artificielle. Ceci est intéressant car les données à traiter pour un pilotage efficace de l'assemblage 3D à tous les niveaux sont très nombreuses : faisabilité, fonctionnalité, coût, impact environnemental, etc.

### Exemples illustratifs et non limitatifs

### 1^{er} exemple : Mémoire à Large bande passante

Dans cet exemple, une mémoire à large bande passante ('High Bandwith Memory' ou HBM) est fabriquée. Pour cela des puces HBM à mémoire vive dynamique synchrone (DRAM) sont fabriquées. Ces puces sont appelées puces HBM DRAM (ou 'HBM DRAM Die'). Des blocs fonctionnels dits 'compute' et 'logic' peuvent être associés à la mémoire HBM par exemple pour former une carte graphique.

A titre indicatif, selon le procédé actuel, les puces HBM DRAM comportant des TSV sont connectées entre elles selon les technologies classiques d'assemblage de composants (par exemple par les technologies de 'micro-bumps' ou 'Pick-And-Place').

Les puces mémoires, 'compute' et 'logic' sont connectées au moyen d'un interposeur comportant des TSV. Cet interposeur est assemblé sur le substrat final par des bosses ('bumps') de Cuivre. La surface totale correspond au moins à celle de la puce HBM + celle de la puce compute + celle de la puce Logic. L'épaisseur de la puce HBM est limitée à 775µm, ce qui correspond au maximum à 16 niveaux de DRAM actuellement.

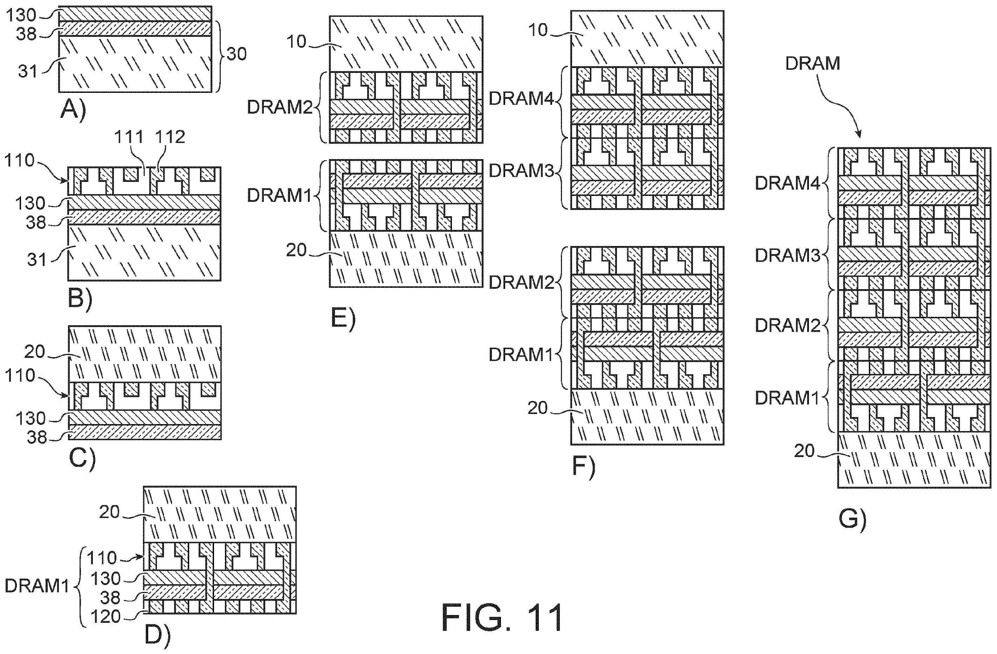

Nous allons maintenant décrire plus en détail le procédé de fabrication de la mémoire à large bande passante selon un mode de réalisation particulier de l'invention, en faisant référence, dans un premier temps, aux figures 11A à 11G. Le procédé pourrait être appliqué à un autre dispositif qu'un dispositif mémoire à large bande passante.

Les couches fonctionnelles DRAM sont fabriquées à partir de substrats SOI 30 de 300mm ayant une couche BOX 38 selon une technologie FDSOI 22nm. Des zones dites NO DUM, c'est-à-dire des zones sans siliciures, sont prévues pour le passage ultérieur des TSV. Les couches fonctionnelles DRAM sont fabriquées jusqu'à leurs niveaux contacts. L'épaisseur d'une couche fonctionnelle DRAM est, par exemple, de l'ordre de 1 à 3µm. Le substrat support en silicium 31 est ainsi recouvert d'une couche de SiO₂ 38 et de la couche fonctionnelle 130 DRAM comprenant une ou plusieurs puces DRAM (figure 11A).

Une première couche d'interconnexion 110 est formée sur la couche fonctionnelle 130. La couche d'interconnexion 110 comprend un premier niveau d'interconnexion formé sur une première face de la couche fonctionnelle et un deuxième niveau d'interconnexion formé sur le premier niveau d'interconnexion selon une technologie double-damascène Cuivre. Les niveaux d'interconnexion sont choisis de sorte que le premier niveau d'interconnexion connecte les contacts des DRAM et certains plots métalliques du deuxième niveau d'interconnexion. Le deuxième niveau d'interconnexion comprend des marques d'alignement pour le collage et sa densité de Cu est de l'ordre de 25%. La dimension des plots métalliques du deuxième niveau d'interconnexion est de l'ordre de 200nm à 10µm (figure 11B).

La couche fonctionnelle DRAM 130 et les niveaux d'interconnexion sont transférés sur un substrat donneur 10 en silicium par collage direct et retrait du substrat SOI (par exemple, au moyen d'un polissage mécanique et d'une gravure en voie liquide, par exemple avec une solution de TMAH) (figure 11C).

La deuxième couche d'interconnexion 120 est ensuite formée sur la couche de SiO₂ 38. Des TSV sont formés depuis la couche de SiO₂ 38 jusqu'à la première couche de connexion 110. Ces TSV traversent la couche de SiO₂ 38 du SOI, et la couche fonctionnelle 130 en Silicium dans lesquelles les DRAM sont fabriquées (les TSV traversent au niveau des zones NO DUM) et le premier niveau d'interconnexion 110. Un niveau d'interconnexion est ensuite formé sur le niveau TSV de sorte qu'il est connecté à certains plots de la première couche d'interconnexion 110. Ce niveau d'interconnexion 120 comprend des marques d'alignement pour le collage et sa densité de Cu est de l'ordre de 25%. La dimension des plots métalliques est de l'ordre de 200nm à 10µm.

L'ensemble ainsi formé correspond au premier bloc fonctionnel DRAM1 sur un donneur Silicium (figure 11D). Cet ensemble joue ensuite le rôle de substrat receveur.

De manière collective, 64 ensembles comprenant un substrat donneur et un bloc fonctionnel DRAM sont formés (DRAM1 à DRAM64) sont ainsi fabriqués.

Chaque couche d'interconnexion 110, 120 a été soumise à 2 CMP de planarisation. Chaque bloc fonctionnel a ses deux surfaces (supérieure et inférieure) prêtes à coller.

L'assemblage des HBM se déroule selon plusieurs étapes.

Dans une première étape, on réalise le collage hybride du bloc fonctionnel DRAM2 sur le bloc fonctionnel DRAM1 puis retrait du substrat donneur 10 de DRAM2 (figure 11E).

Le collage est réalisé par une CMP d'activation Cu-SiO₂ de sorte que la rugosité soit inférieure à 6nm RMS et la différence de hauteur entre le SiO₂ et le Cu soit inférieure à 15nm, le niveau du Cu étant situé en dessous de celui du SiO₂. Les surfaces sont ensuite nettoyées avec un rinçage associé à des ultra-sons et une chimie de type NaOH. Les substrats sont mis en contact dans un équipement industriel de collage hybride, équipé d'un module d'alignement. Un recuit à 200°C est appliqué pour consolider la structure. Le retrait du substrat Silicium est effectué par amincissement mécanique jusqu'à une épaisseur de 20µm, puis par gravure TMAH. On obtient ainsi un empilement de deux blocs fonctionnels DRAM1 et DRAM2 sur un substrat 20. Ces étapes sont répétées pour former d'autres empilements de blocs fonctionnels.

Dans une deuxième étape, on réalise le collage hybride de deux empilements de deux blocs fonctionnels (figure 11F), suivi du retrait du substrat donneur 10 en silicium. On obtient des substrats receveurs 20 recouverts de 4 blocs fonctionnels (par exemple, DRAM1 à DRAM4 sur la figure 11G).

Les étapes de collage sont répétées jusqu'à obtenir un empilement de 64 blocs fonctionnels DRAM sur le substrat 20 en Silicium, soit 6 transferts de blocs (6 collages + 6 retraits). L'épaisseur des 64 niveaux composant la mémoire HBM est de l'ordre de 200µm. Le substrat Silicium peut typiquement avoir une épaisseur de 500µm à 700µm.

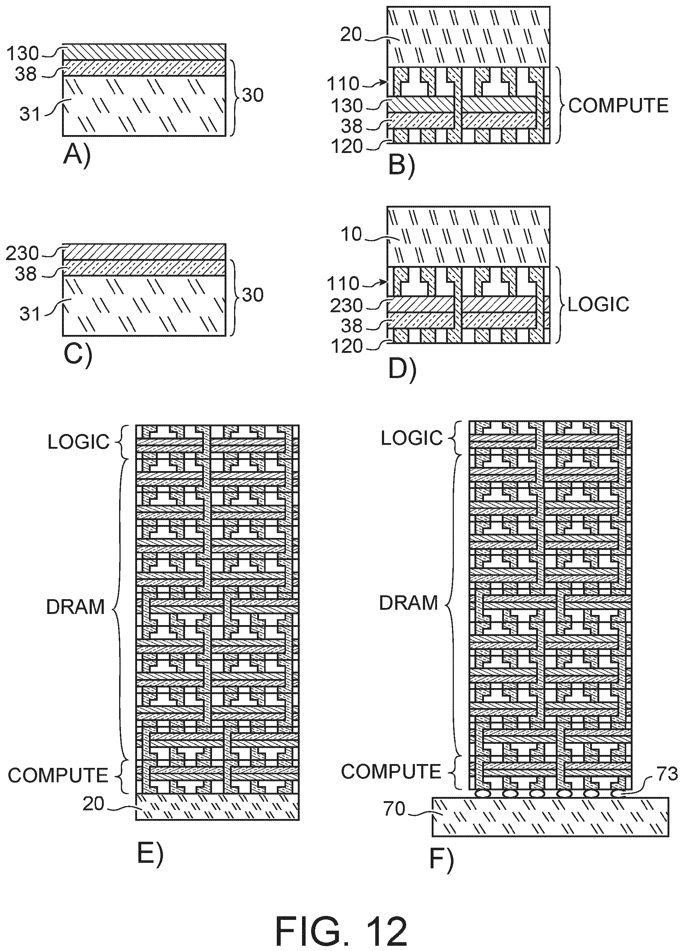

Des substrats donneurs 10 comportant des blocs fonctionnels Compute et des blocs fonctionnels Logic sont fabriqués de la même façon que les blocs DRAM précédemment décrits (figures 12A, 12B, 12C et 12D).

L'empilement de blocs fonctionnels DRAM est transféré sur le bloc fonctionnel COMPUTE et le substrat donneur 20 en Silicium sur lequel été disposé l'empilement de blocs fonctionnels DRAM est retiré. Le bloc fonctionnel LOGIC est transféré sur l'empilement de blocs fonctionnels DRAM et le substrat Silicium sur lequel été disposé le bloc fonctionnel LOGIC est retiré (figure 12E).

L'ensemble est découpé et assemblé avec un substrat final 70 au moyen de plots d'alliages de brasure 73 ('bumps') (figure 12F).

La structure ainsi formée permet un rapprochement des composants, une augmentation du nombre de couches mémoire, une augmentation de la densité d'interconnexion qui sont avantageux pour augmenter ses performances (notamment la consommation électrique) et la fonctionnalité.

Elle permet aussi une réduction de la quantité de métal utilisée, une diminution de la consommation électrique, une réduction des matériaux composant la structure (donc une réduction de son échauffement) qui sont avantageux pour réduire l'impact environnemental.

### 2^{ème} exemple : Processeur pour l'intelligence artificielle

Dans cet exemple, des circuits intégrés (ASIC), spécialisés pour l'IA sont fabriqués par une première fonderie sur un substrat ('wafer') de 300 mm selon des technologies connues de microélectronique, à un nœud avancé (5 nm ou 7 nm) pour optimiser la densité des composants. Selon le design et les procédés de fabrication de la fonderie, chaque circuit est typiquement séparé des autres par des chemins de découpe d'une largeur 10 à 100µm.

Pour augmenter les performances du système (dissipation, latence, ...) il peut alors être intéressant d'utiliser des liens optiques plutôt qu'électriques afin d'améliorer la connexion entre les circuits sur la surface de la puce finale. Il est alors nécessaire de connecter les circuits ASIC à des circuits photoniques. Toujours pour augmenter les performances, il peut être intéressant d'ajouter un niveau de mémoire pour supporter les calculs des circuits ASIC. Il est alors nécessaire de connecter les circuits ASIC à des circuits mémoires.

L'empilement et le design des composants est simulé à l'aide du système de pilotage afin de déterminer les technologies de fabrication des fonctions ASIC, mémoire et photonique (nœud technologique, ...), l'ordre dans lequel ces fonctions doivent être empilées et quel type de connexion (dimension, espacement, ...) doit être utilisé pour optimiser les performances, le coût et l'empreinte écologique du processeur constitué des 3 fonctions.

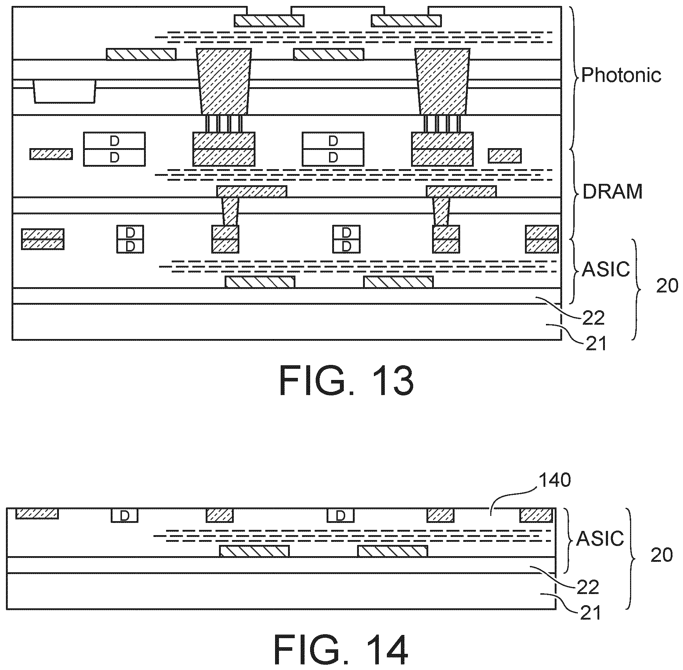

Dans cet exemple, on considère que le système optimal est celui représenté sur la figure 13.

Le substrat receveur 20 comprend un substrat en silicium 21, un circuit ASIC 22 et une couche d'interconnexion 150. Le circuit ASIC 22 et la couche d'interconnexion 150 forment le bloc noté 'ASIC'. Le circuit ASIC 22 est fabriqué par une première fonderie sur un substrat Silicium massif 21 (figure 14). Pour être compatible avec l'invention, le dernier niveau métal MZ du circuit ASIC 22 est dessiné pour être connecté à un bloc fonctionnel mémoire 'DRAM' par collage hybride Cuivre-SiO₂. Il comprend ainsi des marques d'alignement pour le collage et sa densité de Cu est de l'ordre de 25%. Les plots de connexion sont complétés par des plots 'dummies' (noté D sur la figure 14), non connectés, qui permette d'avoir la densité de Cu la plus favorable pour le collage hybride. La dimension des plots métalliques du niveau MZ est de 400nm.

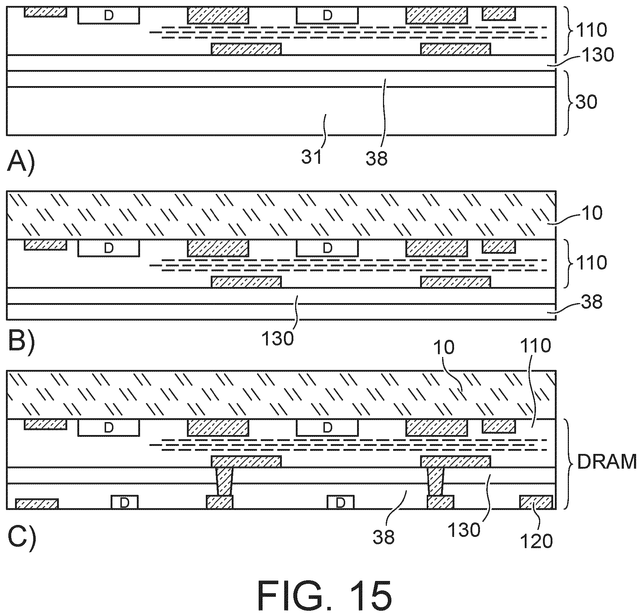

En parallèle, une couche fonctionnelle 130 comprenant un circuit mémoire DRAM est fabriquée par une deuxième fonderie sur un substrat SOI 30 (figure 15A), avec des zones NO DUM exemptes de siliciure au niveau des TSV ultérieurs. Une première couche d'interconnexion 110 (notée 'Metal 1') est formé sur l'extrémité avant de la ligne (FEOL pour 'front end of line') du circuit DRAM, puis plusieurs niveaux de routage sont fabriqués, avec un design adapté sur le dernier niveau DRAM1 pour être connecté ultérieurement à un bloc fonctionnel photonique (noté 'Photonic') par collage hybride Cuivre-SiO₂. A nouveau, le dernier niveau DRAM1 comprend des marques d'alignement pour le collage, des plots de connexion de dimension 5µm, et une densité de Cu de 25% obtenue par des plots de connexion actifs et des plots 'dummies' (Figure 15A). En parallèle, un substrat Si 10 recouvert d'un oxyde thermique d'épaisseur 300nm est implanté avec des ions H⁺ à une énergie de 76 keV et une dose de 6.10¹⁶/cm² (la zone d'implantation est représentée par des tirets sur les figures 15B et 15C). L'ensemble constitué par le circuit DRAM et les niveaux de routage est alors collé sur le substrat Si implanté 10 par collage direct, le substrat en Silicium 31 du substrat SOI 30 de départ est retiré par amincissement mécanique et/ou chimique, avec arrêt sur le BOX 38 du SOI (Figure 15B). Des TSV sont formés par gravure du BOX, du SOI au niveau des zones NO DUM, et du premier niveau Metal 1 de manière à contacter le niveau Metal 1. Une couche d'interconnexion 120 obtenue en réalisant un niveau damascène de routage et des connexion DRAM2 est ensuite réalisé sur les TSV, dont le design est adapté pour être connecté au niveau MZ du bloc fonctionnel ASIC (figure 15C). Le collage direct, les TSV et les niveaux de connexion DRAM2 sont réalisés à une température maximale de 350°C.

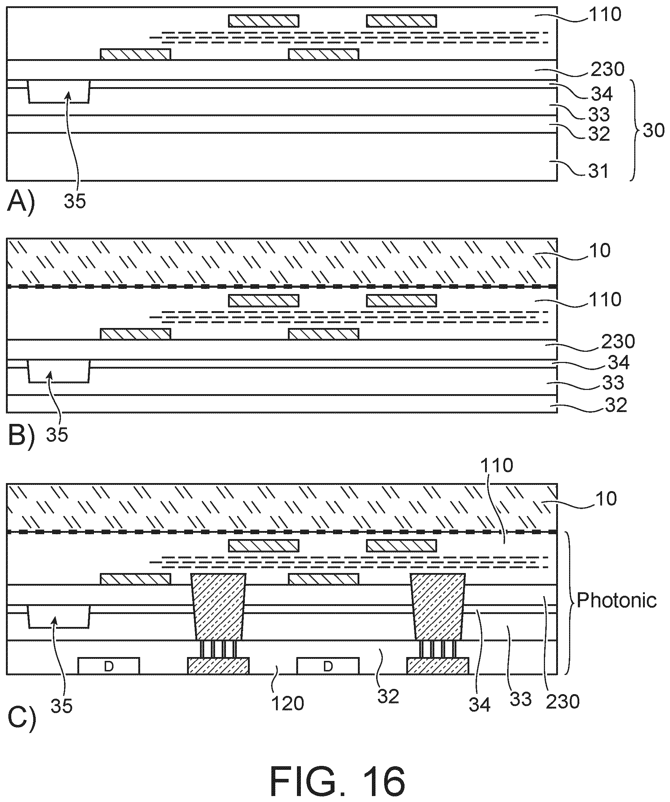

En parallèle, une couche fonctionnelle photonique 230, comportant notamment des fonctions de transformation des signaux électriques en signaux optiques, des fonctions de transport de la lumière, de traitement des données, par exemple au moyen de composants laser, guides d'onde, d'éléments de conversion des données ('serdes'), est fabriquée sur un substrat double-SOI 30, par exemple de 300 mm, par une troisième fonderie. Le substrat double SOI 30 comprend : un substrat Si massif 31, un premier oxyde enterré 32 (BOX) d'épaisseur 3µm, une couche de Silicium résistive 33 d'épaisseur 30µm, un deuxième oxyde enterré 34 d'épaisseur 2µm et une couche de Silicium cristallin d'épaisseur 220nm (Figure 16A). Le FEOL photonique comprend des zones NO DUM au niveau des TSV ultérieurs. Des niveaux d'interconnexion 110 sont obtenus en réalisant un damascène BEOL sur la couche fonctionnelle photonique 130 puis recouverts d'une couche d'oxyde planarisante. Le substrat photonique est alors collé par collage direct sur un substrat donneur 10 en Silicium comportant une surface d'oxyde légèrement rugueuse de manière à obtenir une énergie de collage faible, inférieure à 1 J/m². Le substrat Si massif 31 est retiré par amincissement mécanique et gravure chimique sélective du Silicium s'arrêtant sur le BOX d'épaisseur 3µm (Figure 16B). Des TSV sont formés dans le BOX 32 de 3µm, dans le Si résistif 33 d'épaisseur 30µm, dans le deuxième BOX 34 d'épaisseur 2µm, dans le FEOL photonique 230 au niveau des zones NO DUM jusqu'au niveau Metal 2 du BEOL de sorte à le connecter. Une couche d'interconnexion 120 est obtenue en réalisant un niveau damascène de routage et de connexion sur les TSV, dont le design est adapté pour être connecté au niveau DRAM1 du donneur DRAM (Figure 16C).

On obtient ainsi :
- un substrat ASIC 20 prêt pour assemblage,
- un bloc fonctionnel DRAM sur un substrat donneur 10 implanté prêt pour assemblage,
- un bloc fonctionnel Photonic sur un substrat donneur 10 prêt pour assemblage.

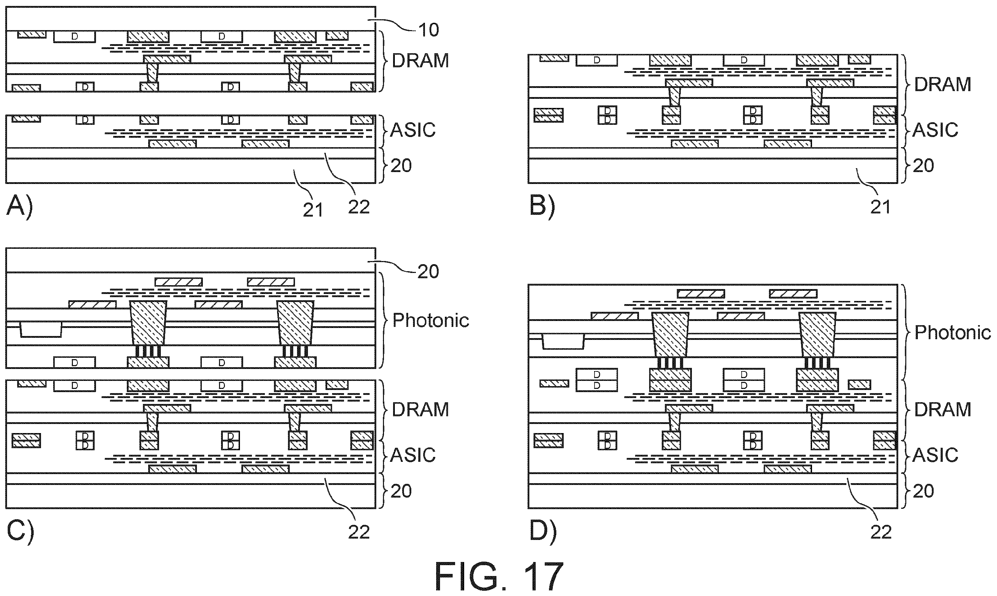

Le bloc DRAM est reporté sur le bloc ASIC par collage hybride aligné (figure 17A) et application d'un traitement thermique à 400°C pendant 7h. Ce traitement thermique provoque une fracture au niveau de la zone implantée en hydrogène (figure 17B). Le bloc DRAM ainsi que la couche d'oxyde thermique d'épaisseur 300nm ainsi qu'une couche de Silicium d'épaisseur 400nm (correspondant à la profondeur d'implantation des ions hydrogène) sont ainsi reportés sur le bloc ASIC. Les couches de Si d'épaisseur 300nm et d'oxyde thermique d'épaisseur 400nm sont retirées par gravure et/ou polissage mécano-chimique de sorte à ce que la surface du niveau DRAM1 soit compatible avec un collage direct.. Le bloc photonique est ensuite reporté sur le bloc DRAM par collage hybride aligné (figure 17C) et rupture de l'interface de collage faible (figure 17D) par l'application de contraintes mécaniques (insertion d'une lame,...).

On obtient l'empilement souhaité. Une gravure locale de l'oxyde au-dessus du dernier niveau métal du BEOL photonique permet la reprise des contacts.

### Exemple 3 : Assemblage hétérogène pour la RF

Dans cet exemple, une méthode industrielle est proposée pour intégrer des transistors bipolaires à double hétérojonctions (DHBTs) à base d'InP sur un circuit digital Silicium pour des applications RF ultra-haute fréquence (THz).

Une problématique des circuits actifs à base InP est le coût très important du matériau InP. Des efforts importants sont faits pour limiter la quantité de matériau utilisé, en utilisant des puces de très petites dimensions (jusqu'à 0,5 x 0,5mm²) reportées sur Si. La partie active d'InP utilisée (zone DHBT) a une épaisseur totale de l'ordre du µm. L'épaisseur d'InP nécessaire à la fabrication du circuit RF est de l'ordre de 500 à 700µm. Une antenne est ensuite appliquée sur la surface libre de la puce InP, formée par exemple d'un empilement de couches métal / diélectrique et connecté à la puce InP. Des circuits logiques CMOS sont aussi nécessaires pour piloter l'ensemble.

L'empilement et le design des composants est simulé à l'aide du système de pilotage, afin de déterminer les technologies de fabrication des fonctions logiques, digital et RF (nœud technologique, matériaux, ...), l'ordre dans lequel ces fonctions doivent être empilées et quel type de connexion (dimension, espacement, ...) doit être utilisé pour optimiser les performances, le coût et l'empreinte écologique du processeur constitué des 3 fonctions. Une attention particulière est portée à la réduction de la consommation du matériau InP, dans un objectif à la fois environnemental et économique.

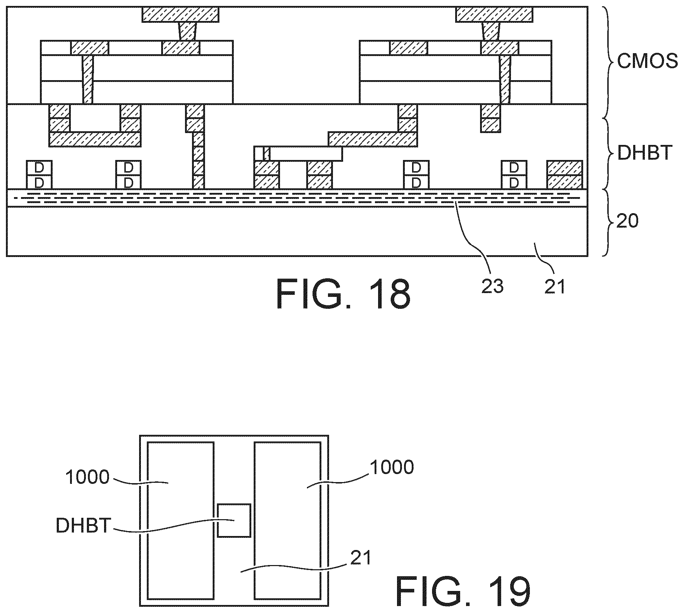

On considère ici que le système optimal est celui représenté sur la figure 18 et sur la figure 19.

La fonction DHBT a pour dimensions 1x1mm², les fonctions CMOS 2x5mm² et les fonctions RF passive sur substrat Si haute résistivité font 5,5 x 5,5mm².

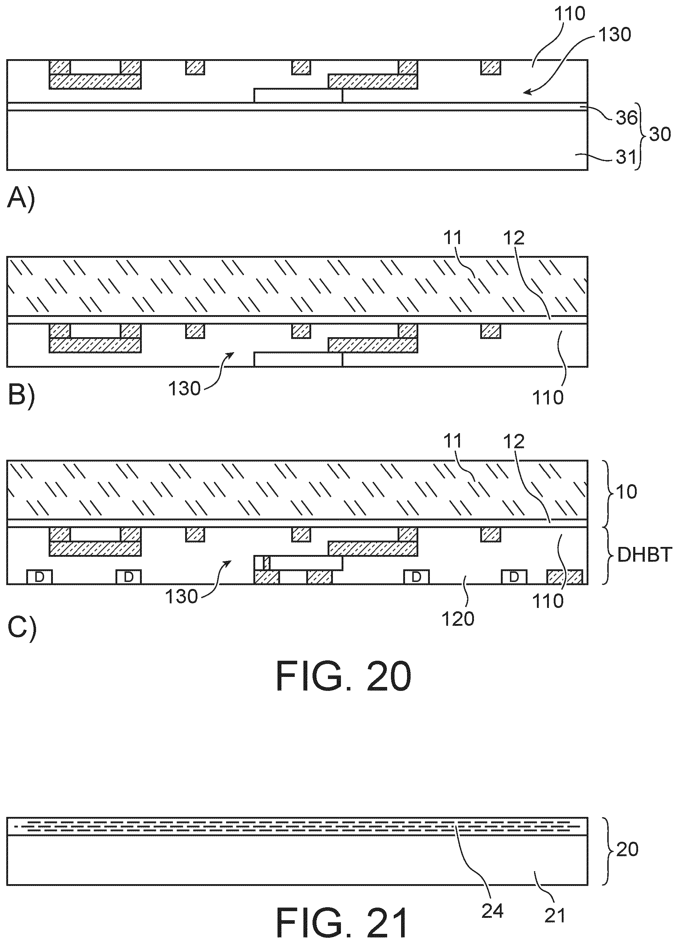

Selon un mode de réalisation, des transistors DHBT sont fabriqués à partir d'un substrat avancé de diamètre 200mm constitué d'un Saphir massif 30 pavé avec des vignettes d'InP de dimensions 1x1mm² et d'épaisseur 0,5µm. Les substrats InP n'étant pas disponibles en diamètre 200mm, et pour réduire la consommation de matériau, ces vignettes peuvent être obtenues selon les technologies connues dites de substrat reconstitué ('rebuilt wafer' ; avec des substrats en Si comportant des puces d'InP non processées) et de transfert de films (application de la technologie Smart Cut^{™} au substrat reconstitué ('rebuilt wafer')). Les vignettes d'InP sont espacées de 5,5mm de manière à pouvoir intégrer ultérieurement les fonctions CMOS sans bloquer les signaux RF émis par le DHBT. Le substrat Saphir 30 comprend un substrat massif en Saphir 31 recouvert par des couches nitrurées sacrificielles 36 compatibles avec un retrait du substrat selon la technique de Laser Lift Off (LLO). Un premier niveau d'interconnexion 110 damascène est réalisé pour connecter les transistors InP, puis un deuxième niveau de routage et de connexion DHBT1 est ensuite réalisé, dont le design est adapté pour être connecté au dernier niveau métal des CMOS (Figure 20A). Le pitch de connexion est de l'ordre de 1µm. La fonction DHBT est transférée sur un donneur saphir 10 de 200mm (comprenant un substrat massif en saphir 11 recouvert par une couche nitrurée 12) par collage direct oxyde-oxyde et retrait du substrat saphir initial 30 par LLO (insolation de la face arrière du saphir 31 par un faisceau laser qui dégrade les couches nitrurées 36). Le collage direct oxyde-oxyde inclut l'insertion de couches nitrurées sur le donneur saphir (Figure 20B). Des TSV sont alors formés à travers les couches d'oxyde de collage utilisées pour le Smart Cut^{™} et à travers l'InP et une couche d'interconnexion 120 formé d'un niveau damascène de routage et de connexion DHBT2 est ensuite réalisé sur les TSV, dont le design est adapté pour être connecté à la fonction digitale (Figure 20C). Un bloc fonctionnel noté 'DHBT' est ainsi obtenu. Le pas ('pitch') de connexion est de l'ordre de 5µm.

En parallèle un circuit digital 24 est formé sur un substrat Si 21 de 200mm de haute résistivité, de sorte à limiter les pertes RF dans le substrat final 20 (figure 21). Le dernier niveau métal du circuit digital est adapté pour être connecté à la fonction DHBT.

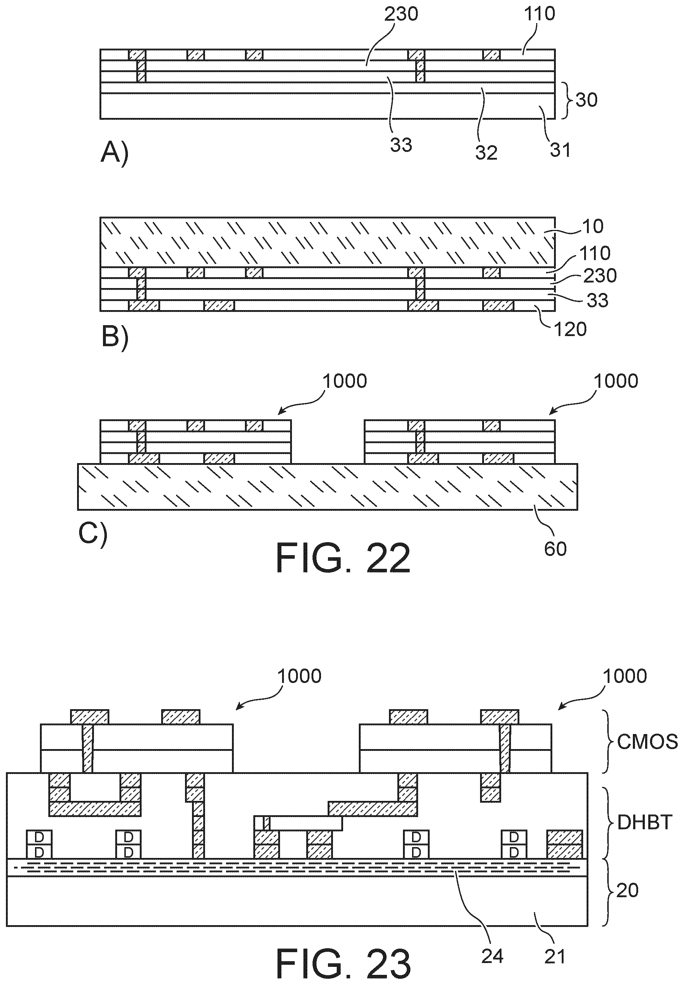

En parallèle, des circuits CMOS sont formés sur un substrat SOI 30 de 200mm pour former une couche fonctionnelle 230. La couche de Si 33 située au-dessus de l'oxyde enterré 32 a une épaisseur de 10µm, les composants CMOS ont une épaisseur de l'ordre de 1 à 2 µm. Une première couche d'interconnexion 110 comprenant un niveau damascène de routage et de connexion CMOS1 est connecté aux circuits CMOS. Son design est adapté pour être connecté à la fonction DHBT (figure 22A). Des TSV sont formés depuis le FEOL des CMOS jusqu'au BOX. La fonction CMOS est ensuite reportée sur un substrat donneur 10 en Silicium par collage et retrait du Si 31 situé sous le BOX 32 (Figure 22B) et une deuxième couche d'interconnexion 120 formée d'un niveau damascène de routage et de connexion CMOS est ensuite réalisé sur les TSV, dont le design est adapté pour es connexions finales de packaging. L'ensemble est placé sur un substrat adhésif 60 ('tape'), aminci jusqu'au BOX et découpé en puces 1000 de 2x5mm² (Figure 22C) .

On obtient ainsi :
- un bloc fonctionnel DHBT sur un substrat donneur 10 en saphir 200mm prêt pour assemblage,
- un bloc fonctionnel CMOS sur un substrat donneur 10 en Si 200mm prêt pour assemblage,
- un substrat receveur Digital RF 20 en Si 200mm prêt pour assemblage.

Le bloc DHBT est reporté sur le bloc Digital à l'échelle de la plaque par collage hybride aligné assisté par SAB et retrait du saphir par LLO. Le collage SAB est réalisé à température ambiante. La mise en œuvre d'un collage SAB permet de s'affranchir de recuit de consolidation du collage grâce à l'efficacité de l'activation de surface. Le report des puces InP DHBT depuis un substrat saphir sur un substrat Si peut donc être réalisé entièrement à température ambiante. Ce procédé permet ainsi d'éliminer les contraintes thermo-mécaniques pendant et après l'assemblage et donc d'éviter les problèmes de fissuration, voire de délamination, qui peuvent être observés dans le cas de report direct InP sur Silicium.

Les blocs CMOS découpés et amincis sont ensuite rapportés sur le bloc DHBT par collage hybride aligné en puce à plaque. Les puces CMOS sur tape sont assemblées sur l'empilement DHBT/digital en utilisant un équipement dit de 'pick and place' compatible avec le collage direct (i.e. sans particules, incluant un nettoyage des surfaces, ...) et un alignement des puces à pitch 1µm.

On obtient ainsi un empilement CMOS/DHBT/Digital sur un substrat Si haute résistivité (figure 23).

Les étapes classiques de packaging RF sont ensuite appliquées : dispenses de résines BCB, formation d'une couche de redistribution ('Redistribution Layer') dans les couches BCB, découpe en puces de 5,5x5,5mm² pour mise en boîtier.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en œuvre pratique des modes de réalisation et variantes décrits est à la portée de la personne du métier à partir des indications fonctionnelles données ci-dessus.

## Revendications

1. Procédé de fabrication d'un assemblage 3D comprenant les étapes suivantes :
- fournir au moins deux ensembles comprenant chacun un substrat donneur (10) recouvert par un bloc fonctionnel (100, 200) comprenant successivement une première couche d'interconnexion (110), une couche fonctionnelle (130, 230) et une deuxième couche d'interconnexion (120), la couche fonctionnelle comprenant un ou plusieurs composants électroniques, la première couche d'interconnexion et la deuxième couche d'interconnexion (110, 120) comprenant un matériau diélectrique (111, 121) dans lequel sont formés des éléments conducteurs (112, 122), de préférence en cuivre, une première surface de la première couche d'interconnexion (110) en contact avec le substrat donneur (10) et la surface libre de la deuxième couche d'interconnexion (120) étant planarisées de sorte à être compatible avec un collage direct ultérieur,
- transférer, successivement, sur un substrat receveur (20) les blocs fonctionnels (100, 200), par collage direct, les éléments conducteurs (112) de la première couche d'interconnexion (110) du premier bloc fonctionnel (100) étant en regard et en contact des éléments conducteurs (122) de la deuxième couche d'interconnexion (120) du deuxième bloc fonctionnel (200), moyennant quoi on obtient un assemblage 3D comprenant un substrat receveur (20) recouvert par un empilement de deux blocs fonctionnels (100, 200).

2. Procédé selon la revendication précédente, dans lequel au moins 5 blocs fonctionnels (200, 300, 400, 500), de préférence au moins 10 blocs fonctionnels, sont transférés successivement sur le substrat receveur (20).

3. Procédé selon l'une des revendications précédentes, dans lequel après le transfert des blocs fonctionnels (100, 200), le procédé comprend les étapes suivantes :
- coller l'assemblage 3D sur un adhésif (60),
- découper le substrat receveur (20) et les blocs fonctionnels (100, 200) et retirer le substrat receveur (20), moyennant quoi on obtient plusieurs empilements de blocs fonctionnels singularisés (100, 200),
- éventuellement, coller les différents empilements de blocs fonctionnels singularisés (100, 200) sur un élément externe, tel qu'un circuit imprimé ou un substrat laminé.

4. Procédé selon l'une des revendications précédentes, dans lequel un des blocs fonctionnels (100, 200) recouvre partiellement le substrat donneur (10), des blocs d'interconnexion (140) étant disposés, sur le substrat donneur (10), de chaque côté dudit bloc fonctionnel (100, 200) et dans lequel ledit bloc fonctionnel (100, 200) et les blocs d'interconnexion (140) sont transférés simultanément sur le substrat receveur (20).

5. Procédé selon l'une des revendications précédentes, dans lequel au moins un des ensembles est obtenu selon les étapes suivantes :
- fournir un substrat temporaire (30) recouvert par la couche fonctionnelle (130, 230),
- former la première couche d'interconnexion (110) sur une première face de la couche fonctionnelle (130, 230), et la planariser,
- transférer la première couche d'interconnexion (110) et la couche fonctionnelle (130, 230) sur le substrat donneur (10), en collant le substrat donneur (10) sur la couche fonctionnelle (130, 230) et en séparant le substrat temporaire (30),
- former la deuxième couche d'interconnexion (120) sur une deuxième face de la couche fonctionnelle (130, 230),
- planariser la deuxième couche d'interconnexion (120).

6. Procédé selon l'une des revendications précédentes, dans lequel une partie ou la totalité des blocs fonctionnels (100, 200, 300, 400, 500) comprennent des puces électroniques.

7. Procédé selon l'une des revendications précédentes, dans lequel le substrat receveur (20) est recouvert par une couche d'interconnexion (150) comprenant un matériau diélectrique (151) dans lequel sont formés des éléments conducteurs (152).

8. Procédé selon l'une des revendications précédentes, dans lequel la couche fonctionnelle (130, 230) a une épaisseur inférieure à 100 µm et, de préférence, inférieure à 50 µm.

9. Procédé selon l'une des revendications précédentes, dans lequel l'énergie de collage entre le substrat donneur (10) et le bloc fonctionnel (100, 200) est inférieure à l'énergie de collage entre le bloc fonctionnel (100, 200) et le substrat receveur (20) ou le substrat donneur (10) comporte une couche fragile enterrée.

10. Procédé selon l'une des revendications précédentes, dans lequel le substrat donneur (10) est recouvert par un empilement de plusieurs blocs fonctionnels, et dans lequel, lors de l'étape de transfert, l'empilement de blocs fonctionnels est transféré en une seule fois sur le substrat receveur (20).

11. Procédé de détermination des étapes d'un procédé de fabrication d'un assemblage 3D, le procédé de détermination comprenant les étapes suivantes :
- définir des fonctions de l'assemblage 3D, l'assemblage 3D comprenant un substrat (20) et un empilement de différents blocs fonctionnels (100, 200, 300, 400, 500), chaque bloc fonctionnel (100, 200, 300, 400, 500) comprenant une couche fonctionnelle (130, 230, 330, 430, 530), comprenant un ou plusieurs composants électroniques, disposée entre deux couches d'interconnexion (110, 120), les couches d'interconnexion (110, 120) comprenant un matériau diélectrique (111, 121) dans lequel sont formés des éléments conducteurs (112, 122), de préférence en cuivre, chaque bloc fonctionnel (100, 200, 300, 400, 500) étant plan,
- simuler l'assemblage 3D en choisissant différentes natures et/ou dimensions du substrat (20) et/ou des blocs fonctionnels et/ou en choisissant différents empilements de blocs fonctionnels,
moyennant quoi on sélectionne un premier procédé de fabrication de l'assemblage 3D.

12. Procédé selon la revendication précédente, dans lequel au moins un autre procédé de fabrication de l'assemblage 3D est défini et comparé au premier procédé de fabrication de l'assemblage 3D, selon plusieurs critères, par exemple en termes de faisabilité, de risque technique, de fonctionnalité, de coût et/ou d'impact sur l'environnement, de manière à choisir le procédé de fabrication de l'assemblage 3D le plus adapté.

13. Assemblage 3D comprenant un substrat receveur (20) sur lequel sont empilés au moins deux blocs fonctionnels (100, 200), de préférence au moins 5 blocs fonctionnels (100, 200, 300, 400, 500), encore plus préférentiellement au moins 10 blocs fonctionnels, chaque bloc fonctionnel (100, 200, 300, 400, 500) comprenant une couche fonctionnelle (130, 230, 330, 430, 530), comprenant un ou plusieurs composants électroniques, disposée entre deux couches d'interconnexion (110, 120), les couches d'interconnexion (110, 120) comprenant un matériau diélectrique (111, 121) dans lequel sont formés des éléments conducteurs (112, 122), de préférence en cuivre, chaque bloc fonctionnel (100, 200, 300, 400, 500) étant plan.

14. Assemblage selon la revendication précédente, dans lequel chaque bloc fonctionnel (100, 200, 300, 400, 500) comprend une puce électronique.

15. Ensemble comprenant un substrat donneur (10) recouvert par un bloc fonctionnel (100) comprenant successivement une première couche d'interconnexion (110), une couche fonctionnelle (130) et une deuxième couche d'interconnexion (120), la couche fonctionnelle comprenant un ou plusieurs composants électroniques, la première couche d'interconnexion et la deuxième couche d'interconnexion (110, 120) comprenant un matériau diélectrique (111, 121) dans lequel sont formés des éléments conducteurs (112, 122), de préférence en cuivre, une première surface de la première couche d'interconnexion (110) en contact avec le substrat donneur (10) et la surface libre de la deuxième couche d'interconnexion (120) étant planarisées de sorte à être compatible avec un collage direct ultérieur.
